# EUROPÄISCHE PATENTSCHRIFT

(11) **EP 1 896 858 B1**
(45) Veröffentlichungstag und Bekanntmachung des Hinweises auf die Patenterteilung: **09.03.2016**
(21) Anmeldenummer: 06777396.0
(22) Anmeldetag: 21.06.2006
(51) Int. Cl.: G01N 35/00, B01L 3/00

(54) **VORRICHTUNG UND VERFAHREN ZUR AUFBEREITUNG EINER PROBE FÜR EINE ANALYSE UND VORRICHTUNG UND VERFAHREN ZUR ANALYSE EINER PROBE**
DEVICE AND METHOD FOR PREPARING A SAMPLE FOR AN ANALYSIS AND DEVICE AND METHOD FOR ANALYZING A SAMPLE
DISPOSITIF ET PROCEDE DE PREPARATION D'UN ECHANTILLON POUR UNE ANALYSE ET DISPOSITIF ET PROCEDE D'ANALYSE D'UN ECHANTILLON

(30) Priorität: 27.06.2005 DE 102005029809
(43) Veröffentlichungstag der Anmeldung: 12.03.2008
(73) Patentinhaber: Boehringer Ingelheim Vetmedica GmbH, 55216 Ingelheim am Rhein (DE)
(72) Erfinder: EHBEN, Thomas, 91085 Weisendorf (DE); ZILCH, Christian, 04275 Leipzig (DE)
(74) Vertreter: Von Rohr Patentanwälte Partnerschaft mbB
(86) Internationale Anmeldenummer: PCT/EP2006/063399
(87) Internationale Veröffentlichungsnummer: WO 2007/000401

(56) Entgegenhaltungen:
- WO-A-01/41931
- WO-A-03/058196
- US-A1- 2002 076 825
- US-A1- 2004 018 611
- US-A1- 2004 043 479

## Beschreibung

Die vorliegende Erfindung bezieht sich auf eine Vorrichtung und ein Verfahren zur Aufbereitung einer Probe für eine Analyse und auf eine Vorrichtung und ein Verfahren zur Analyse der Probe.

Die Bio- und Gentechnologie hat in den letzten Jahren zunehmend an Bedeutung gewonnen. Eine Grundaufgabe in der Bio- und Gentechnologie ist der Nachweis von biologischen Molekülen wie DNA (Desoxyribonukleinsäure) oder RNA (Ribonukleinsäure), Proteinen, Polypeptiden, etc. Insbesondere Moleküle, in denen Erbgutinformation kodiert ist, sind für viele medizinische Anwendungen von großem Interesse. Lurch ihren Nachweis, beispielsweise in einer Blutprobe eines Patienten, können. Krankheitserreger nachgewiesen werden, was eine Diagnose für einen Arzt erleichtert. Die DNA ist eine Doppelhelix, die aus zwei vernetzten wendelförmigen Einzelketten, so genannten Halbsträngen, aufgebaut ist. Jeder dieser Halbstränge weist eine Basensequenz auf, wobei durch die Reihenfolge der Blasen (Adenin, Guanin, Thymin, Cytosin) die Erbinformation festgelegt ist. DNA-Halbstränge weisen die charakteristische Eigenschaft auf, sehr spezifisch nur mit ganz bestimmten anderen Molekülen eine Bindung einzugehen. Daher ist es für das Andocken eines DNA-Halbstrangs an einen anderen DNA-Halbstrang Voraussetzung dass die jeweiligen Moleküle zueinander komplementäre angeordnet sind.

Dieses von der Natur vorgegebene Prinzip kann zum selektiven Nachweis von Molekülen in einer zu untersuchenden Probe verwendet werden. Die Grundidee eines auf diesem Prinzip basierenden Biochip-Sensors besteht darin, dass auf einem Substrat aus einem geeigneten Material zunächst so genannte Fängermoleküle (OligonukLeotide), beispielsweise mittels Mikrodispensierung aufgebracht und immobilisiert werden, d.h, an der Oberfläche des Biochip-Sensors dauerhaft fixiert werden. In diesem Zusammenhang ist es bekannt, Bio-Moleküle mit Thiol-Gruppen (SH-Gruppen) an Gold-Oberflächen zu immobilisierten.

Ein entsprechender Biochip-Sensor mit einem Substrat und daran gebundenen Fängermolekülen, die beispielsweise auf einen bestimmten, nachzuweisenden DNA-Halbstrang sewsitiv sind, wird üblicherweise zum Untersuchen einer Probe, meist in Form einer Flüssigkeit, auf das Vorhandensein des DNA-Halbstrarigs verwendet werden. Hierzu ist die auf das Vorhandensein eines bestimmten DNA-Halbstrangs zu untersuchende Probe mit den immobilisierten Fängermolekülen in Wirkkontakt zu bringen. Sind ein Fängermolekül und ein zu untersuchender DNA-Halbstrang zueinander komplementär, so hybridisiert der DNA-Halbstrang an dem Fängermolekül, d.h. er wird daran gebunden. Wenn infolge dieser Bindung sich der Wert einer messtechnisch erfassbaren physikalischen Größe in charakteristischer Weise ändert, so kann dieser Wert gemessen werden und auf diese Weise das Vorhandensein oder Nichtvorhandensein eines DNA-Halbstrangs in der untersuchten Probe festgestellt werden.

Das beschriebene Prinzip ist nicht auf den Nachweis von DNA-Halbsträngen beschränkt. Vielmehr sind weitere Kombinationen von auf dem Substrat aufgebrachten Fängermolekülen und zu erfassenden Molekülen in einer zu untersuchenden Probe bekannt. So können beispielsweise Nukleinsäuren als Fängermoleküle für Peptide oder Proteine, die nukleinsäurespezifisch binden, verwendet werden. Weiterhin bekannt ist, Peptide oder Proteine als Fängermoleküle für andere, das Fängerpeptid bzw. das Fängerprotein bindende Proteine oder Peptide zu verwenden. Zum Nachweis der erfolgten Bindung zwischen dem auf dem Substrat aufgebrachten Fängermolekül und dem in der zu untersuchenden Probe vorhandenen, zu erfassenden Molekül werden häufig elektronische Nachweisverfahren verwendet. Solche Nachweisverfahren erlangen zunehmende Bedeutung bei der industriellen Identifikation und Bewertung von neuen Medikamenten organischer oder gentechnologischer Herkunft. Diese Nachweisverfahren eröffnen vielfältige Anwendungen beispielsweise in der medizinischen Diagnostik, in der Pharmaindustrie, in der chemischen Industrie, in der Lebensmittelanalytik, sowie in der Umwelt- und Lebensmitteltechnik.

Zur Durchführung einer Analyse der oben beschriebenen Art, beispielsweise zum Nachweis einer bestimmten DNA, sind im Allgemeinen mehrere Aufbereituhgsschritte erforderlich, mittels derer in der Probe enthaltene DNA extrahiert wird. Im Folgenden wird beispielhaft auf den Fall der Analyse einer Blutprobe eines Patienten eingegangen, die Ausführungen sind aber auch auf andere Analyseverfähren übertragbar.

Die zur Analyse durchzuführenden Aufbereitungsschritte umfassen eine Vielzahl biochemischer Vorgänge. So müssen zurächst aus der Blutprobe die zu analysierenden Bestandteile, beispielsweise Bakterien oder Viren, extrahiert und die restliche Blutprobe entsorgt werden. Durch eine so genannte Lyse wird mittels einer Pufferlösung die umgebende Hülle der Viren oder Bakterien zerstört und so die später zu analysierende DNA freigesetzt. Da im Allgemeinen für einen Nachweis der DNA zu wenige Exemplare der DNA in der Blutprobe vorliegen, findet mittels einer bekannten Reaktion, der so genannten Polymerase-Kettenreäktion (PCR), eine Vervielfältigung der DNA statt. Im weiteren Verlauf der Analyse sind verschiedene Möglichkeiten bekannt, die DNA und damit den Krankheitserreger nachzuweisen.

Alle Arbeitsschritte können von Hand in einem Labor durchgeführt werden. Die manuelle Durchführung der Arbeitsschritte ist komplex und erfordert speziell geschulte Fachkräfte. Es muss mit einer Vielzahl von Reagenzien und sonstigen Komponenten gearbeitet werden. Der Prozess der Aufbereitung der Probe und damit auch die Analyse der Probe werden dadurch fehleranfällig und aufwändig.

Zur Vereinfachung und weitestgehenden Automatisierung sind Vorrichtungen bekannt die aus einem wieder verwendbaren Teil, im Folgenden Steuergerät, und einem einmal verwendbaren Teil, im Folgenden Cartridge, bestehen. Die Probe wird in die Cartridge eingefüllt und die Cartridge in das Steuergerät eingeführt. Innerhalb der Cartridge wird die Probe aufbereitet und analysiert und über das Steuergerät die Ergebnisse einem Benutzer, beispielsweise einem Laboranten oder Arzt, zur Verfügung gestellt. Derartige Vorrichtungen zur Aufbereitung und/oder Analyse der Probe verfügen häufig über eine Vielzahl von mechanischen und fluidischen Komponenten. So werden die zur Aufbereitung und Analyse benötigten Reagenzien häufig im Steuergerät gelagert. Während der Aufbereitung und Analyse der Probe werden die Reagenzien über fluidische Schnittstellen in die Cartridge gepumpt. Dabei besteht die Gefahr, dass die Cartridge durch die Schnittstellen des Steuergeräts kontaminiert wird, was insbesondere in der Nukleinsäurediagnostik zu Problemen führen kann.

Es besteht die Möglichkeit, die erforderlichen Reagenzien für die Reaktion in der Cartridge unterzubringen und bei Bedarf mit der Probe zur Durchführung der entsprechenden Reaktion zu vermengen. Die erforderlichen Flüssigkeitsmengen führen jedoch im Allgemeinen zu einem großen Flüssigkeitsvolumen und damit zu einer großen Cartridge. Insbesondere wird der Transport der Probe häufig durch mikrofluidische Kanäle über einem Wassertransport realisiert, wobei das Wasser durch Pumpen innerhalb der Kanäle bewegt wird.

Zur Vereinfachung der Aufbereitung ist die Verwendung so genannter Magnet-Beads bekannt. Hier sind mehrere Vorrichtungen und Verfahren am Markt verfügbar. Die Magnet-Beads bestehen jeweils aus einem, beispielsweise inleinem Polymerkügelchen eingekapselten ferromagnetischen Nanopartikel von wenigen Mikrometern Durchmesser. Die Magnet-Beads können von außen mit verschiedenen Affinitätsmolekülen oder anderen geeigneten Oberflächenmodifikationen versehen werden. Die Magnet-Beads sind dann dazu geeignet, aus einer Lösung bestimmte Biomoleküle an ihre Oberfläche zu binden. Typischerweise wird in einem Aufreinicsungsverfahren eine Suspension von Magnet-Beads in die zu trennende Probe in einem Reagenzröhrchen begeben. Anschließend wird ein Magnetfeld angelegt, das die Partikel durch Anlagerung an eine Wand des Röhrchens abtrennt. Der Überstand wird verworfen und die Partikel werden noch mindestens einmal gewaschen. Dazu wird zunächst das Magnetfeld entfernt und die Partikel in einer frischen Lösung suspensiert. Hiernach wird durch erneutes Anlegen des Magnetfeldes erneut an der Gefäßwand abgeschieden. So ist es nach mehreren Waschschritten möglich, durch eine Pufferlösung, die die gebundenen Biomoleküle von den Magnet-Beads abtrennt, die Moleküle in einer frischen Lösung zu suspensieren. Die Magnet-Beads, werden wieder an der Gefäßwand abgeschieden, so dass die Biomoleküle in der überstehenden Lösung zur Verfügung stechen. Nachteilig am beschriebenen Verfahren ist die jeweils große benötigte Flüssigkeitsmenge im Bereich mehrerer hundert Mikroliter.

Aus der DE 101 11 520 B4 ist ein Verfahren zur Aufreinigung von Biomolekülen mit Hilfe magnetischer Partikel bekannt, bei der insbesondere kleinere Flüssigkeitsmengen weitestgehend automatisiert aufgereinigt werden können. Es wird beschrieben, die Suspension mit magnetischen Partikeln durch eine Rohrleitung zu fordern" die ein starkes Magnetfeld passiert. Dabei werden bei geeigneter Auslegung von Durchmesser, Fließgeschwindigkeit und magnetischer Feldstärke die magnetischen Partikel beim Durchfluss an der Wand der Rohrleitung abgeschieden. Der Überstand wird durch Leeren der Rohrleitung verworfen oder in einer Vorlage gesammelt. Die festgehaltenen Partikel lassen sich nun durch Überströmen mit Waschlösungen waschen. Die Magnetpartikel können während der Waschprozedur in der Rohrleitung gehalten werden oder suspensiert und wieder abgeschieden werden. Durch Überströmen mit einer geeigneten Pufferlösung werden die Biomoleküle von den Magnetpartikeln aus der Suspension getrennt. Die Rohrleitung ist dabei so zu gestalten, dass auch die Handhabung kleiner Flüssigkeitsmengen mit weniger als 50 um möglich ist. Das beschriebene Verfahren ist insbesondere zur Aufreinigung von DNA oder RNA geeignet. Die am Ende des Verfahrens in Lösung zur Verfügung stehende DNA bzw. RNA kann automatisiert in ein entsprechendes Analysesystem eingebracht werden. Die Automatisierung kann beispielsweise über einen Pipetierroboter geschehen. Soll die DNA über eine sequenzspezifische Hybridisierung nachgewiesen werden, wird außerdem vorgeschlagen, die Rohrleitung zusätzlich über eine Heizvorrichtung zu führen, um eine Denaturierung des DNA-Doppelstrangs zu erreichen. Um mit dem beschriebenen Verfahren zur DNA-Analyse zu gelangen, ist es allerdings weiterhin notwendig, mittels nicht beschriebener Verfahrensschritte aus der Probe die DNA zu extrahieren.

Aus der DE 101 11 457 A1 ist eine Diagnoseeinrichtung zur Anwendung in der biochemischen Analytik bekannt, bei der eine Chipkarte zur Messung in ein Steuergerät eingeschöben wird. In der Chipkarte sind mehrere Reagenzkanäle ausgeformt, in denen für den Prozess benötigte Reagenzien in vördosierter Menge vorhanden sind. Jeder Reagenzkanal verfügt über einen Wassereinlass, durch den Wasser aus dem Steuergerät in die Chipkarte gebracht werden kann. Über einen mit den Reagenzkanälen verbundenen Probenkanal wird die zu analysierende Probe durch einen Proben-Port in die Chipkarte gebracht. Im Probenkanal ist ein Sensor-Modul angeordnet, auf dem Fänger-Möleküle angeordnet sind. Mit dem Sensor-Modul sind beispielsweise DNA-Moleküle in der Probe nachweisbar. Nach dem Sensor-Modul ist am Probenkanal ein Auslass vorhanden, durch den die Probe nach Vorbeiströmen am Sensor-Modul zur Entsorgung ins Steuergerät befördert wird. Zur Beförderung der Probe ist im Steuergerät wenigstens eine Pumpe vorgesehen.

Liu et al haben in Anal. Chem. (2004) 76, 1824-1831 einen voll integrierten Biochip offenbart, bei dem Zellen mittels einer Bindung an Magnet-Beads aus einer Probe extrahiert werden. Die Probe wird in eine Kammer gepumpt, wo Magnet-Beads zugesetzt werden. Über eine Antikörperbeschichtung der Magnet-Beads werden die gesuchten Blutzellen an die Magnet-Beads gebunden und beim weiteren Pumpen in eine PCR-Kammer durch einen dort angeordneten Magneten festgehalten. Nachfolgend wird eine PCR durchgeführt, deren resultierendes PCR-Produkt in eine Hybridisierungskammer gepumpt und dort nachgewiesen wird.

Lee et al haben in Appl. Phys. Lett. (2004) 85, 1063-1065 eine Vorrichtung beschrieben, die eine Mikroelektromagnetmatrix umfasst. Mittels dieser Matrix ist es möglich, Magnet-Beads innerhalb eines Mikrofluidikkanals zu bewegen. Dabei werden die einzelnen Magnete der Matrix sukzessive an- und ausgeschaltet, so dass eine Nettokräft auf die Magnet-Beads ausgeübt wird.

In der US 6,605,454 B2 wird eine Mikrofluidiktrorrichtung beschrieben, bei der Magnet-Beads zum Separieren von Nukleinsäuren aus einer probenflüssigkeit verwendet werden. Zunächst in der Probenflüssigkeit enthaltene Zellen werden lysiert und die so freigesetzten Nukleinsäuren mittels der Magnet-Beads gebunden. Durch Anlegen eines magnetischen Feldes werden die Magnet-Beads mit den gebundenen Nukleinsäuren zurückgehalten, während die übrige Probenflüssigkeit in einen Abfallkanal gepumpt wird. Die Nukleinsäure wird auf diese Weise von der übrigen Probenflüssigkeit separiert und kann weiter analysiert werden.

In der WO 01/41931 A2 wird ein Mikrofluidiksystem beschrieben, das eine integrierte Probenaufbereitung und Detektion aufweist. Dabei wird eine Probe zunächst in eine Lysekammer gepumpt, in der zur Freisetzung der DNA ein Zellaufschluss durchgeführt wird. In einer nachfolgenden Separationskammer wird die DNA von der Probe separiert. Dazu werden paramagnetische Magnet-Beads eingesetzt, die die DNA binden und durch ein Magnetfeld an der Kammerwand zurückgehalten werden. Nach der Separation und Waschen wird die DNA in eine weitere Kammer gepumpt, in der eine Amplifikationsreaktion durchgerührt wird. Abschließend wird die DNA in einer Detektionskammer nachgewiesen. Der Transport von Zellen und DNA zwischen den verschiedenen Kammern erfolgt mittels Pumpen, die Kammern sind durch Mikrokanäle verbunden.

Gijs hat in Microfluid. Nanofluid. (2004) 1, 22-40 diverse Anwendungen für Mägnet-Beads zusammengefasst. Unter anderem wird darauf hingewiesen, dass Lösungen bekannt sind, bei denen magnetische Partikel mehrere Millimeter in mikroflüidischen Kanälen bewegbar sind. Die beschriebenen Lösungen sind beispielsweise in sog. Lab-on-a-Chip-Systemen einsetzbar.

Smistrup et al haben im Journal of Magnetism and Magnetic Materials (2005) 293, 597-604 Simulationen und Experimente beschrieben, die sich mit der magnetischen Separation von Magnetsystemen beschäftigen. Dabei werden Magnet-Beads aus einer fließenden Flüssigkeit durch ein Magnetfeld zurückgehalten.

Choi et al haben in Lab Chip (2002) 2, 27-30 ein integrierte mikrofluidisches biochemisches Detektionssystem für Protein-analyse beschrieben. Dabei werden mit Antikörper beschichtet Magnet-Beads verwendet und durch ein magnetisches Feld immobilisiert. Nachfolgend werden Zielantigene durch den Mikrofluidikkanal gepumpt, so dass sich diese an die immobilisierten Magnet-Beads anlagern können. Nach Abschalten eines Magnetfeldes werden die Magnet-Beads mittels Flüssigkeitsflusses aus der Kammer transportiert.

In der WO 2004/078316 A1 wird eine Transportvorrichtung für Magnet-Beads beschrieben. Dabei sind Spulen im Bereich einer kapillaren Kammer angeordnet. Durch die Gestaltung der resultierenden Magnetfelder ist es möglich, die Magnet-Beads durch die Kammer zu transportieren.

WO 03/058196, US 2002/0076825 und WO 01/41931 sind andere Beispiele für Dokumente aus der Stand der Technik.

Es ist Aufgabe der vorliegenden Erfindung, eine Vorrichtung und ein Verfahren zur Aufbereitung einer Probe für eine Anal lyse und eine Vorrichtung und ein Verfahren zur Analyse einer Probe anzugeben, bei denen die Vorrichtungen einfach aufgebaut sind und weitestgehend auf manuelle Arbeitsschritte verzichtet werden kann.

Die vorrichtungsbezogenen Aufgaben werden durch Vorrichtungen mit den Merkmalen des Anspruchs 1 bzw. des Anspruchs 39 gelöst. Die verfahrensbezogenen Aufgaben werden durch Verfahren mit den Merkmalen der Ansprüche 40 bzw. 60 gelöst.

Unter dem Begriff "biologische Struktur" sollen im Folgenden insbesondere Bakterien, Zellen und Viren verstanden werden. Es können allerdings auch andere biologische Strukturen der Probe,wie beispielsweise Sporen, und Protozoen oder sonstige zu analysierende Bestandteile der Probe sein. Unter dem Begriff biologisches Molekül" sollen im Folgenden vor allem DNA, RNA, Proteine, Kohlenhydrate und Lipide verstanden werden. Im Allgemeinen sollen jegliche Arten von Molekülen verstanden werden, die letztendlich zur Analyse der Probe nachgewiesen werden sollen. Dazu zählen beispielsweise auch organische und anorganische Toxine. Die folgenden Erläuterungen beziehen sich jeweils auf eine Struktur und ein darin enthaltenes bzw. daraus extrahiertes Molekül. Im Allgemeinen werden in einer Probe jedoch eine Vielzahl von Strukturen verschiedener Arten, also beispielsweise verschiedene Bakterien vorhanden sein, die jeweils Moleküle, also beispielsweise DNA enthalten. Ebenfalls wird im Allgemeinen von jeder Art von Struktur eine Vielzahl von Exemplaren vorliegen, von denen wenigstens ein Teil aufbereitet wird.

Durch die Mittel zum Binden der biologischen Struktur ist es auf einfache Weise möglich, die Struktur aus der Probe zu extrahieren und der Weiterverarbeitung zuzuführen. So wird zunächst die zu analysierende Struktur der Probe gebunden und danach das in der Struktur enthaltene biologische Molekül freigesetzt. Durch die Mittel zum Binden des freigesetzten Moleküls ist dieses der Weiterverarbeitung zugänglich. So kann beispielsweise eine angestrebte Analyse anschließend durchgeführt werden.

Es ist möglich mehrere Mittel zum Binden von verschiedenen Strukturen vorzusehen. Durch die Mittel zum Freisetzen werden entsprechende Moleküle aus den Strukturen extrahiert und gegebenenfalls durch mehrere Mittel zum Binden der Moleküle gebunden. So ist es auf einfache Weise möglich, mehrere verschiedene Strukturen innerhalb einer Analyse in der Probe nachzuweisen.

Ebenfalls werden im Allgemeinen mehrere Strukturen durch die Mittel zum Binden der Struktur gebunden und der Weiterverarbeitung zugeführt. Dadurch wird sichergestellt, dass für eine nachfolgende Analyse ausreichend Exemplare von Molekülen vorhanden sind.

In einer vorteilhaften Ausführung der Erfindung sind die Mittel zum Binden der Struktur und die Mittel zum Binden des Moleküls beweglich ausgeführt. So können sowohl die Struktur als auch das Molekül nach dem Binden mit den jeweiligen Mitteln auf einfache Weise bewegt und weiterverarbeitet werden.

In einer vorteilhaften Ausgestaltung der Erfindung umfassen die Substrate jeweils wenigstens ein Magnet-Bead. Über die magnetische Eigenschaft lassen sich die Substrat-Struktur- bzw. Substrat-Molekül-Komplexe besonders einfach nach bekannten Methoden innerhalb der Vorrichtung manipulieren. Insbesondere lassen sich so die Schritte des Einfüllens der Probe in die Vorrichtung, des Trennens der Strukturen von der Probe, des Freisetzens der Moleküle und des Weiterverarbeitung der Moleküle auf einfache Weise realisieren. Die Magnet-Beads sind durch Beschichtung ihrer Oberfläche oder durch Aufbringen von Fängermölekülen auf einfache Weise an die Anforderungen der durchzuführenden Aufbereitung bzw. Analyse anpassbar. So kann beispielsweise über Oligonukleotide auf der Oberfläche der Magnet-Beads erreicht werden, dass diese nur die gesuchte Art von DNA binden und so der weiteren Verarbeitung zugänglich machen. Durch Antikörper auf der Oberfläche können sich die Magnet-Beads mit Zellen verbinden.

Besonders vorteilhaft ist, dass die Mittel zum Binden der Struktur und die Mittel zum Binden des Moleküls als ein Substrat ausgeführt sind. Das Substrat ist dann sowohl mit der Struktur zu einem Substrat-Struktur-Komplex als auch mit dem Molekül zu einem Substrat-Molekül-Komplex verbindbar. Durch die Vereinigung beider Bindemittel auf einem einzigen Substrat wird die Vorrichtung weiter vereinfacht, da weniger Komponenten erforderlich sind. So werden in einem entsprechenden Verfahren zunächst die Struktur mit dem Substrat zum Substrat-Struktur-Komplex verbunden und danach die Mittel zum Freisetzen des biologischen Moleküls zugegeben. Das freigesetzte Molekül wird dann mit dem Substrat zum Substrat-Molekül-Komplex verbunden und kann zur Analyse weiterverarbeitet werden. Sind zum Nachweis mehrere Exemplare von Molekülen erforderlich, so lassen sich diese auf einfache Weise durch Erhöhung der Anzahl von gleichartigen Substraten aus der Probe, sofern vorhanden, extrahieren.

Sollen mehrere verschiedene Strukturen nachgewiesen werden, sind entsprechende Substrate verschiedener Arten vorzusehen, so dass für jede nachzuweisende Struktur eine Art von Substrat in der Vorrichtung vorhanden ist, die mit dieser Struktur und dem darin enthaltenen Molekül eine Bindung eingehen kann.

Auch hier ist die Ausführung des Substrats als Magnet-Beads von Vorteil. Durch die mehrfache Funktionalisierung können Magnet-Beads gespart werden. Es wird nur eine Art von Magnet-Beads für eine nachzuweisende Struktur benötigte. Durch Magnet-Beads mit unterschiedlicher Funktionalisierung können mehrere Strukturen und Moleküle gleichzeitig in der Vorrichtung verarbeitet werden.

In einer vorteilhaften Ausgestaltung der Erfindung umfasst die Vorrichtung eine Anzahl von Prozesskammern, worin wenigstens vorübergehend die Mittel zum Binden der Struktur, die Mittel zum Freisetzen von des Moleküls und die Mittel zum Binden des Moleküls enthalten sind. Durch die Auftrennung des Prozesses in mehrere Prozesskammern kann sichergestellt werden, dass nur jeweils die weiter zu verarbeitenden Teile der Probe den jeweiligen Prozessschritten zugeführt werden.

Es ist vorteilhaft, die Prozesskammern als eine Aufbereitungskammer zur Verwendung der Mittel zum Binden der Struktur und eine Strukturaufschlusskammer zur Verwendung der Mittel zum Freisetzen des Moleküls und der Mittel zum Binden des Moleküls auszuführen. So kann die Probe in die Aufbereitungskammer eingefüllt werden, woraufhin durch die Magnet-Beads die zu analysierenden Strukturen der Probe gebunden werden. Die Magnet-Beads werden nun in die Strukturaufschlusskammer bewegt, wo die entsprechenden Strukturen gelöst werden und das Molekül freigesetzt werden. Das freigesetzte Molekül wird durch das Substrat gebunden und steht zur weiteren Analyse zur Verfügung.

Besonders vorteilhaft ist es, die Mittel zum Binden der Struktur in der Aufbereitungskammer zu lagern und die Mittel zum Freisetzen des Moleküls sowie die Mittel zum Binden des Moleküls in der Strukturaufschlusskammer zu lagern. Die Verwendung trockener Reagenzien ist dabei besonders vorteilhaft. So können zu Beginn des Verfahrens die entsprechenden Prozesskammern beispielsweise mit Wasser geflutet werden und so die Reagenzien gelöst werden. Nach Zugabe der Probe erfolgt die Aufbereitung der Probe weitestgehend automatisiert.

Die Aufbereitungskammer kann sowohl mit den übrigen Prozesskammern in einer zusammenhängenden Einheit enthalten sein. Alternativ ist es möglich, die Aufbereitungskammer beispielsweise als Spritze auszuführen und die Aufbereitung der Probe in einer der durchzuführen. Die Mittel zum Binden der Struktur sind entsprechend in der Spritze gelagert. Die Probe wird erst nach der Aufbereitung in die Einheit mit den übrigen Prozesskammern gebracht und so der weiteren Aufbereitung zugeführt.

In einer vorteilhaften Ausgestaltung der Erfindung sind die Mikrokanäle derart dimensioniert, dass sowohl der SubstratStruktur-Komplex als auch der Substrat-Molekül-Komplex durch sie transportierbar ist und dass während der Durchführung der Prozessschritte ein störender Austausch anderer Stoffe zwischen den Prozesskammern verhindert wird. Durch die an sich offenen Mikrokanäle wird zwar stets ein Austausch von Flüssigkeiten zwischen den Prozesskammer stattfinden. Durch hinreichend kleine Dimensionierung ist es allerdings möglich, nur einen sehr -geringen Austausch zu erlauben. Dieser ist so gering zu wählen, dass während der Dauer eines Aufbereitungs- oder Analysevorgangs keine Störung der ablaufenden Prozessschritte durch den Austausch erfolgt.

In einer vorteilhaften Ausgestaltung der Vorrichtung umfasst diese eine einmal verwendbare Einheit und ein Steuergerät. Die Prozesskammern sind in der einmal verwendbaren Einheit enthalten. Dies ermöglicht vor allem eine einfache Handhabbarkeit der Vorrichtung. So kann die Probe in die einmal verwendbar Einheit eingefüllt werden und diese, nach an sich bekannter Vorgehensweise, in das Steuergerät eingeführt werden. In den Prozesskammer der einmal verwendbaren Einheit findet die Aufbereitung der Probe für die Analyse statt.

In einer vorteilhaft ausgebildeten Vorrichtung sind Mittel zum Bewegen und/oder Fixieren des Substrat-Struktur-Komplexes und des Substrat-Molekül-Komplexes vorhanden. Dadurch lässt sich auf einfache Weise erreichen, dass die Substrat-Struktur-Komplexe aus der Aufbereitungskammer in die Strukturaufschlusskammer bewegt werden können und dort fixiert werden können.

Die erfindungsgemäße Vorrichtung zur Analyse der Probe umfasst eine Vorrichtung der oben beschrieben Art. Außerdem sind Mittel zum Nachweis des biologischen Moleküls vorhanden.

Vorteilhaft ist eine Vorrichtung derart, dass die Mittel zum Nachweis des Moleküls wenigstens teilweise in einer Nachweiskammer der Vorrichtung angeordnet sind. Die Substrat-Molekül-Komplexe lassen sich nach dem Freisetzen des Moleküls und Binden an die Substrate auf einfache Weise in die Nachweiskammer der Vorrichtung bewegen und dort analysieren.

In einer vorteilhaften Ausgestaltung der Vorrichtung umfassen die Mittel zum Nachweis des Moleküls eine Detektionseinheit und weitere Mittel zum Binden des Moleküls. Durch die weiteren Mittel zum Binden des Moleküls können die SubstratMolekül-Komplexe in der Nächweiskammer gebunden werden und durch die Detektionseinheit nachgewiesen werden.

In einer besonders vorteilhaften Ausführung der Vorrichtung umfasst die Detektionseinheit einen magnetoresistiven Sensor. Durch den magnetoresistiven Sensor lassen sich die in den Substrat-Molekül-Komplexen vorhandenen Magnet-Beads auf einfache Weise detektieren. Ein geeigneter magnetoresistiver Sensor ist beispielsweise ein GMR-Sensor (Giant-Magnetoresistance), wie er aus der heutigen Festplattentechnik bekannt und in großen Stückzahlen und kleiner Größe verfügbar ist. Alternativ kann auch ein TMR-Sensor (Tunneling-Magnetoresistance) eingesetzt werden, wie er beispielsweise in magnetischen Arbeitsspeichern (MRAM) für Computer eingesetzt wird.

Das erfindungsgemäße Verfahren ist in Anspruch 39 definiert.

Mit einer der beschriebenen Vorrichtungen lässt sich das Verfahren zur Aufbereitung der Probe weitestgehend automatisiert durchführen. Durch weniger manuelle Schritte wird insbesondere die Sauberkeit des Prozesses erhöht und somit Fehlanalysen vermieden.

Das erfindungsgemäße Verfahren zur Analyse der Probe umfasst folgende Verfahrensschritte:
- Aufbereitung der Probe mit einem Verfahren nach der oben beschriebenen Art und
- Nachweis des Moleküls.

Das beschriebene Verfahren ist mit der entsprechenden Vorrichtung weitestgehend automatisiert durchführbar.

Weitere Vorteile der Erfindung werden im nachfolgend beschriebenen Ausführungsbeispiel unter Bezugnahme auf die Figuren erläutert. Es zeigen:
Figur 1 eine schematische Darstellung einer Cartridge mit verschiedenen Prozesskammern,
Figuren 2 bis 4 verschiedene Ausführungen einer Cartridge und eines Steuergeräts,
Figur 5 ein schematisches Abiaufdiagramm eines Verfahrens zur Analyse einer Probe.

Im Folgenden werden verschiedene Ausführungsbeispiele der Erfindung beschrieben. Dabei wird jeweils Beispiel einer Vorrichtung zur Aufbereitung und Analyse einer Blutprobe eines Patienten ausgegangen. In der Blutprobe wird nach vorher festgelegten Zellen gesucht. Die Vorrichtung ist speziell auf diese Zellen zugeschnitten. Aus den Zellen wird die DNA extrahiert und nachgewiesen.

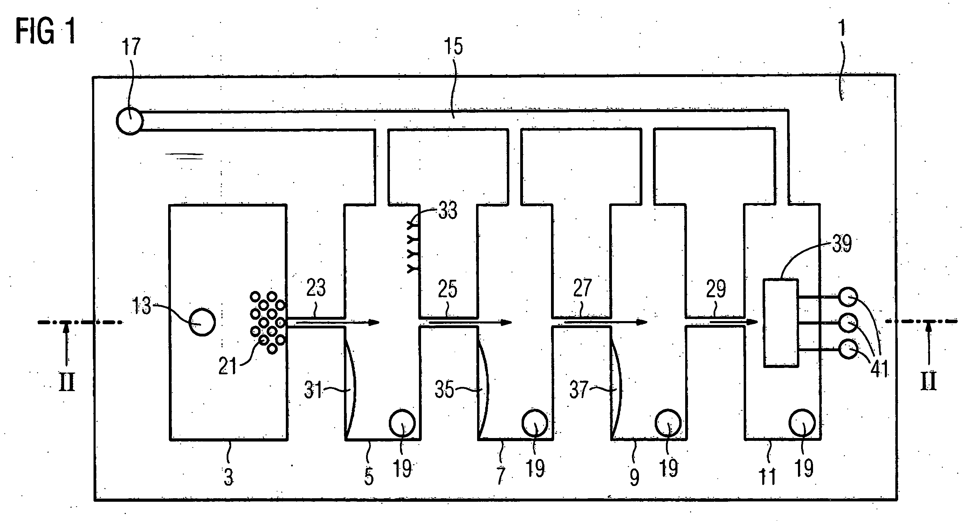

In Figur 1 ist schematisch eine Cartridge 1 dargestellt. Sie umfasst eine Aufbereitungskammer 3, eine Strukturaufschlusskammer 5, eine Waschkammer 7, eine Amplifikationskammer 9 und eine Nachweiskammer 11. Die Aufbereitungskarhmer 3 umfasst eine Einfüllöffnung 13, über die beispielsweise mittels einer Spritze die zu untersuchende Probe in die Aufbereitungskammer 3 eingebracht werden kann. Außer der Aufbereitungskammer 3 ist jede der Prozesskammer über einen Mikrokanal 15 mit einer Öffnung 17 verbunden sind. Über die Öffnung 17 wird in an sich bekannter Weise Wasser in die Prozesskammern gebracht. Außer der Aufbereitungskammer 3 weist jede Prozesskammer eine Entlüftungsöffnung 19 auf, die beispielsweise mit einer Membran verschlossen ist. So kann sichergestellt werden, dass Gas die Prozesskammern verlassen kann, Flüssigkeiten jedoch nicht. An der Aufbereitungskammer 3 ist eine Entlüftungsöffnung nicht erforderlich, wenn beim Einfüllen der Probe die übrigen Prozesskammern noch nicht mit Wasser gefüllt sind. In diesem Fall wird die Aufbereitungskammer 3 über die Strukturaufschlusskammer 5 entlüftet. Soll im Prozessablauf vor Einfüllen der Probe mit Wasser geflutet werden, so ist auch an der Aufbereitungskammer 3 eine entsprechende Entlüftungsöffnung vorzusehen.

In der Aufbereitungskammer 3 sind Magnet-Beads 21 in trockener Form vorgelagert. Durch das Einfüllen der Probe wird die Aufbereitungskammer 3 geflutet, so dass die Magnet-Beads 21 suspensiert und in der Probe verteilt werden.

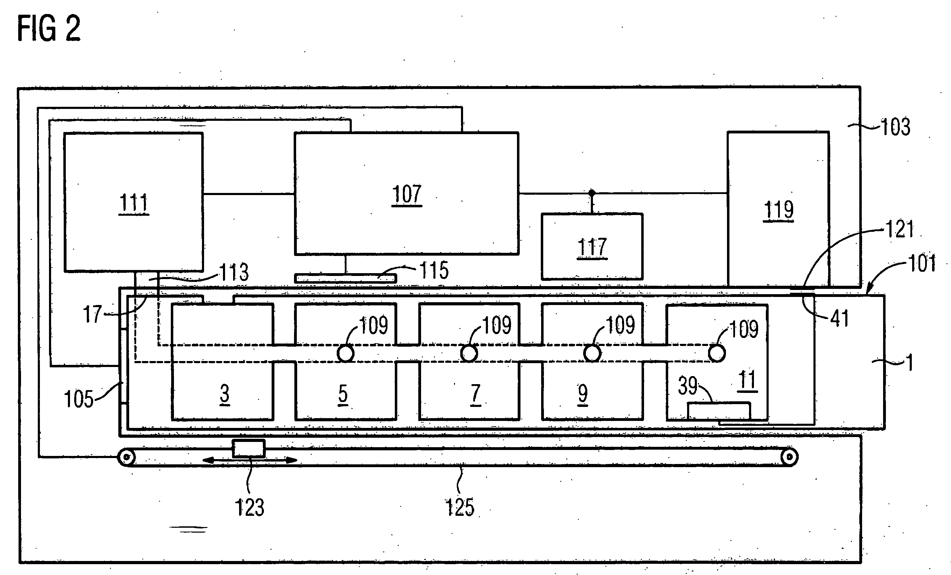

Die Isolation der gesuchten Zellen aus der Probe geschieht durch Magnet-Beads 21, auf deren Oberflächen Antikörper angeordnet sind. Durch die Antikörper werden die Zellen an die Magnet-Beads 21 gebunden und auf ihrer Oberfläche immobilisiert. Dabei können sowohl mono- als auch polyklonale Antikörper zum Einsatz kommen. Dabei sind monoklonale Antikörper lediglich auf eine zu bindende Zellsorte gerichtet, polyklonale Antikörper bestehen hingegen aus einem Gemisch, durch das verschiedene Zellsorten gebunden werden können. Es ist jedoch auch möglich, weniger spezifisch bindende Moleküle, wie beispielsweise Proteine zum Binden von bakteriellen Liposachariden einzusetzen. Zur optimalen Durchmischung der Probe und der Magnet-Beads 21 und Beschleunigung der Verbindungsreaktion werden die Magnet-Beads 21 in der Aufbereitungskammer 3 hin und her bewegt. Verschiedene Mechanismen zum Bewegen der Magnet-Beads 21 innerhalb der Cartridge 1 sind in den Figuren 2 bis 4 dargestellt.

Die Prozesskammern sind untereinander gemäß der Reihenfolge der ablaufenden Prozessschritte durch Mikrokanäle 23 verbunden. Die Mikrokanäle 23, 25, 27 und 29 sind derart dimensioniert, dass ein störender Flüssigkeitsaustausch zwischen den Prozesskammer während der gesamten Dauer der Aufbereitung und Analyse weitestgehend unterbunden wird und keinen storenden Einfluss hat. Die Mikrokanäle 23, 25, 27 und 29 sind andererseits ausreichend groß, um Magnet-Beads 21 mit angebundenen Strukturen bzw. Molekülen passieren zu lassen. Auch Komplexe, in denen mehrere Magnet-Beads 21 an eine Struktur gebunden sind bzw. mehrere Strukturen an ein Magnet-Bead 21, können die Mikrokanäle 23, 25, 27 und 29 passieren. Gleiches gilt für die Komplexe aus Magnet-Beads 21 und Molekülen. Ebenfalls ist der Durchmesser groß genug, um Konglomerate passieren zu lassen, in denen sich mehrere Magnet-Beads 21 und mehrere Strukturen bzw. Moleküle zusammenballen. Der Durchmesser der Mikrokanäle 23, 25, 27 und 29 wird folglich typischerweise in der Größenordnung mehrerer µm liegen.

Alternativ ist es möglich, die Mikrokanäle 23, 25, 27 und 29 größer zu dimensionieren und durch Ventile zu verschließen. Diese Ventile werden zum Durchlass der Magnet-Beads 21 mit gebundenen Zellen bzw. DNA kurzzeitig geöffnet und danach wieder verschlossen.

Nachdem die Magnet-Beads 21 mit den gesuchten Zellen der Probe die Verbindung eingegangen sind, werden die entsprechenden Komplexe durch den Mikrokanal in die Strukturaufschlusskammer 5 bewegt. In der Strukturaufschlusskammer 5 sind-geeignete Reagenzien 31 (Lysepuffer) gelagert, die einen Strukturaufschluss der Zellen ermöglichen. Dadurch werden die im Inneren der Zellen liegenden DNA-Moleküle freigesetzt. Dieser Prozess wird durch leichtes Erwärmen unterstüzt. Zur Erzielung der Erwärmung ist im Steuergerät, das im weiter unten beschrieben wird, ein Peltier-Element öder ein Heizelement vorgesehen. Der an sich bekannte Lysepuffer liegt in der Strukturaufschlusskammer 5 in trockener Form vor und wird durch das Fluten mit Wasser zu Beginn des Verfahrens gelöst.

Die zellbindenden Eigenschaften der Antikörper auf den Magnet-Beads 21 werden im weiteren Verlauf der Aufbereitung und Analyse nicht mehr benötigt und können entfernt werden. Zu diesem Zweck ist dem Lysepuffer ein Proteasen-Enzym beigemischt, das die Antikörper von der Oberfläche der Magnet-Beads 21 ablöst und zerstört. Dadurch wird verhindert, dass sich Zellreste an den Magnet-Beads 21 anlagern, die den Analyseprozess störend beeinflussen könnten.

Durch den Strukturaufschluss wird die in den Zellen enthaltene DNA freigesetzt. Diese DNA soll im weiteren Verlauf des Verfahrens analysiert werden. Die DNA-Moleküle sind im Allgemeinen für eine Analyse zu groß. Deshalb werden die DNA-Moleküle zerkleinert. Zu diesem Zweck ist dem Lysepuffer ein Restriktionsenzym zugesetzt, das die DNA je nach verwendetem Enzym entweder an spezifischen Stellen oder unspezifisch zerteilt. Der Zerkleinerungsgrad der DNA wird dabei durch die Konzentration des Restriktionsenzyms im Lysepuffer bestimmt. Alternativ ist es möglich, die DNA durch mechanische Beanspruchung zu zerkleinern. Hier können die Magnet-Beads 21, an denen die DNA gebunden ist, in der Strukturaufschlusskammer 5 in schnelle Bewegungen gebracht werden. Der entstehende Rühreffekt zerkleinert die DNA-Moleküle.

Zur späteren Analyse ist es ebenfalls erforderlich, die noch als Doppelstrang vorliegende DNA zu vereinzeln. Dieser Vorgang wird als Denaturierung bezeichnet und geschieht durch dem Lysepuffer zugesetzte Natronlauge und eine kurzzeitige Erwärmung des Lysepuffers auf etwa 40°C.

Alternativ ist es möglich, die DNA im Doppelstrang zu belassen und erst zu einem späteren Zeitpunkt zu denaturieren. In diesem Fall ist dem Lysepuffer kein Natronlauge zugesetzt.

Bei einer Vielzahl von Analysevorgängen ist die gesuchte DNA nur in sehr geringer Anzahl in der Probe vorhanden. Dies ist beispielsweise bei der Untersuchung von Blutproben auf Bakterien oder Viren häufig der Fall. In derartigen Blutproben liegt viel mehr humane DNA (eukaryontische DNA) in der Probe vor als beispielsweise virale oder bakterielle DNA (prokaryontische DNA). In diesen Fällen ist es wichtig, die eukaryontische DNA abzusondern, um Störungen der weiteren Prozessschritte zu vermeiden. Dazu sind an einer Wand der Strukturaufschlusskammer 5 spezifische Antikörper 33 immobilisiert, die Histone binden. Da Histone nur in eukaryontischer DNA vorkommen, wird nur diese Form von DNA an der Wand immobilisiert. Die prokaryontische DNA kann der weiteren Aufbereitung und Analyse zugeführt werden.

Alternativ ist es möglich, die spezifischen Antikörper 33 auf die Oberflächen der Magnet-Beads 21 aufzubringen du so nur die eukaryontische DNA der weiteren Analyse zuzuführen.

Zum Trennen der DNA von dem in der Strukturaufschlusskammer 5 vorliegenden Gemisch, werden die zerkleinerten DNA-Stränge an die Magnet-Beads 21 gebunden. Die Magnet-Beads 21 weisen zu diesem Zweck eine weitere Bindungseigenschaft in Form von Oligonukleotiden oder einer Silan-Beschichtung der Oberflächen auf. Während die Oligonukleotide eine spezifische Verbindung mit der zu analysierenden DNA eingehen, bindet das Silan unspezifisch alle DNA-Stränge. Außerdem kann an die Oligonukleotide nur denaturierte DNA binden, während an der silanisierten Oberfläche auch DNA-Doppelstränge gebunden werden können. Sollen während der Analyse mehrere Sorten von DNA, beispielesweise von unterschiedlichen Bakteriensorten nachgewiesen werden, so ist es neben der Verwendung der Silan-Beschichtung auch möglich, mit verschiedenen oligonukleotiden funktionalisierte Magnet-Beads 21 einzusetzen. Auf den Oberflächen der jeweiligen Magnet-Beads 21 sind dann zu den zu untersuchenden DNA-Strängen komplementäre Oligonukleotide angeordnet. So ist es auf einfache Weise möglich, mehrere DNA-Moleküle aufzubereiten.

Um eventuell noch vorhandene Zellreste und andere Verunreinigungen zu beseitigen ist die Waschkammer 7 vorgesehen. Die Komplexe aus Magnet-Beads 21 und DNA werden durch den Mikrokanal 25 in die Waschkammer 7 bewegt. In der Waschkammer 7 sind chaotrope Salze 35 gelagert, die zunächst in trockener Form vorliegen und durch das Füllen der Waschkammer 7 mit Wasser zu Anfang des Prozesses in Lösung gelien. Zur Unterstützung des Waschvorgangs werden die Magnet-Beads 21 in eine kreisende Bewegung versetzt.

Für komplexe Aufbereitungs- oder Analyseverfahren können mehrere Waschkammern vorgesehen sein, die entweder nacheinander oder nach unterschiedlichen Prozessschritten eine Reinigung ermöglichen.

Die an die Magnet-Beads 21 gebundenen DNA-Moleküle stehen im Allgemeinen nicht für einen Nachweis in ausreichender Zahl zur Verfügung. Aus diesem Grund findet vor dem eigentlichen Nachweis der DNA eine Amplifikation statt. Zu diesem Zweck werden die Magnet-Beads 21 in eine Amplifikationskammer 9 bewegt, die über den Mikrokanal 27 mit der Waschkammer 7 verbunden ist. In der Amplifikationskammer 9 findet eine Amplifikation, beispielsweise durch eine Polymerase-Kettenreaktion (PCR) statt. In der Amplifikationskammer 9 befinden sich entsprechende Reagenzien in trockener Form, die vor Beginn des Prozesses mittels Wasser gelöst wurden. Im Steuergeräts befindet sich ein Peltier-Element, mittels dem sich Temperaturzyklen in der Amplifikationskammer 9 durchführen lassen. Der Aufbau des Steuergeräts ist schematisch in Figur 2 gezeigt.

Bei der Temperaturerhöhung kommt es im Allgemeinen zu einer Ablösung der DNA-Moleküle von den Oligonukleotiden der Magnet-Beads 21. Außerdem findet bei DNA-Doppelsträngen eine Denaturierung statt. Nach Absenken der Temperatur binden sich in der Amplifikationskammer 9 befindliche DNA-Primer, also kurze DNA=Fragemente an die eihzelsträngigen DNA-Moleküle. Diese werden durch Polymerase-Moleküle zur vollen Länge ergänzt, wodurch DNA-Doppelstränge entstehen. Durch erneute Erwärmung werden diese DNA-Doppelstränge denaturiert. Durch erneutes Absenken der Temperatur lagern sich erneut DNA--primer an die denaturierten DNA-Stränge an und werden durch die Polymerase zur vollen Länge ergänzt. Nach einer Anzahl von Temperaturzyklen hat sich die Anzahl der DNA-Moleküle signifikant erhöht, so dass ausreichend DNA-Mäterial für einen Nachweis zur Verfügung steht. Im beschriebenen Verfahren lassen sich auch verschiedene Arten von DNA gleichzeitig amplifizieren, was durch den Einsatz verschiedener DNA-Primer erreicht wird.

Es ist möglich, die auf den Magnet-Beads 21 immobilisierten Oligonukleotide als DNA-Primer für die PCR zu verwenden. In der Amplifikationskammer 9 müssen dann keine DNA-Primer mehr gelagert werden. Durch die Polymerase werden die Oligonukleotide auf den Magnet-Beads 21 verlängert. Da im Allgemeinen eine Vielzahl von Oligonukleotiden auf jedem Magnet-Bead 21 immobilisiert sind und nur an einem geringen Prozentsatz dieser oligonukleotide DNA aus der Probe gebunden ist, stehen genug kurze Oligonukleotide für die Zyklen der PCR zur Verfügung.

Zum Nachweis der DNA werden die an die Magnet-Beads 21 gebundenen DNA-Moleküle durch einen Mikrokanal in eine Nachweiskammer 11 bewegt. In der Nachweiskammer 11 sind spezifische Oligonukleotide an einer Detektionseinheit 39 immobilisiert. Die DNA-Moleküle hybridisieren mit den Oligonukleotiden und werden dadurch immobilisiert. Die ebenfalls an den DNA-Molekülen befindlichen Magnet-Beads 21 werden dadurch ebenfalls immobilisiert. Durch zusätzliches Bewegen der Magnet-Beads 21 innerhalb der Nachweiskammer 11 kann dieser Vorgang beschleunigt werden. Dabei können die Magnet-Beads 21 einerseits kreisförmig bewegt werden, alternativ durch wechselhafte Bewegungen zu dem Oligonukleotiden hin und wieder von ihnen weg. Zur Erhöhung der Messgenauigkeit und zur Senkung der Nachweisgrenze werden die nicht immobilisierten Magnet-Beads 21 von den Oligonukleotiden wegbewegt.

Wurde auf den Einsatz von DNA-Primern während der PCR verzichtet, können die an den Magnet-Beads 21 gebundenen DNA-Stränge nicht hybridisieren, da sie bereits vollständige Doppelstränge sind. Zur Vermeidung dieser Problematik, wird das Binden von freien DNA-Strängen an die verlängerten Oligonukleotide nach der PCR durch Erhöhung der Temperatur verhindert. Die Magnet-Beads 21 werden in die Nachweiskammer 11 bewegt, wo die verlängerten Oligonukleotiden mit den Oligonukleotiden der Detektionseinheit 39 direkt hybridisieren, ohne dass die DNA aus der Probe direkt am eigentlichen Nachweis beteiligt ist.

Der Nachweis der gesuchten DNA-Moleküle geschieht durch Nachweis der immobilisierten von Magnet-Beads 21 an derjenigen Stelle der Kammer, an der komplementäre Oligonukleotide angeordnet sind. Dazu umfasst die Detektionseinheit 39 einen Serisor, der die Magnet-Beads 21 anhand einer spezifischen Eigenschaft nachweisen kann. Dies kann ein magnetoresistiver Sensor, beispielsweise ein GMR- oder TMR-Sensor sein. Durch die Immobilisierung der Magnet-Beads 21 kommt es zu einer lokalen Veränderung des Magnetfelds. Diese Veränderung bewirkt ein entsprechende Widerstandsänderung des GMR-Sensors. So können durch eine an sich bekannte Messung des Widerstands des GMR-Sensors die immobilisierten Magnet-Beads 21 ermittelt werden. Durch die bekannte Anordnung der komplementären Oligonukleotide und den entsprechenden Nachweis der an ihnen immobilisierten Magnet-Beads 21 lässt sich bestimmen, welche DNA in der Probe vorliegt. Dies wiederum lässt Rückschlüsse darauf zu, ob die gesuchte Zelle in der Probe vorliegt. Auf der Cartridge 1 sind elektrische Kontakte 41 angeordnet, die mit der Detektionseinheit 39 verbunden sind. Über die Kontakte 41 -können die Messwerte des Sensors an das Steuergerät übertragen werden, was anhand von Figur 2 erläutert wird.

Alternativ ist es möglich, die Magnet-Beads 21 mittels Fluoreszenzfarbstoffen in einem an sich bekannten optischen Verfahren sichtbar zu machen. Die Nachweiskammer 11 umfasst dazu hier nicht dargestellte, transparente Bereiche, durch die die Ansammlung von Magnet-Beads 21 an den spezifischen Oligonukleotiden beobachtet werden kann.

In einer alternativen Ausführungsform der Erfindung wird die Probe außerhalb der Vorrichtung mit den Magnet-Beads 21 vermengt, wodurch sich die entsprechenden zu analysierenden Zellen mit den Magnet-Beads 21 verbinden. Die so aufbereitete Probe wird dann direkt über eine entsprechende Einfüllöffnung in die Strukturaufschlusskammer 5 gebracht.

In einer weiteren alternativen Ausführungsform der Erfindung sind die Mikrokanäle 23, 25, 27 und 29 durch jeweils ein Ventil verschließbar. Durch das Ventil kann sichergestellt werden, dass während des Ablaufs der Reaktion kein störender Flüssigkeitsaustausch zwischen den verschiedenen Prozesskammern stattfinden kann.

Figur 2 zeigt eine schematische Darstellung der Cartridge 1 entlang der Linie II geschnitten. Die Cartridge 1 ist in eine Aufnahme 101 eines Steuergeräts 103 eingeschoben, das ebenfalls geschnitten dargestellt ist. In hinteren Teil der Aufnahme 101 ist ein Anschlag 105 ausgebildet. Dadurch wird sichergestellt, dass die Cartridge 1 in der korrekten Position eingeschoben wird. Der Anschlag 105 ist drucksensitiv und mit einer Kontrolleinheit 107 verbunden, die den Prozessablauf der Aufbereitung und Analyse steuert. Durch die Kontrolleinheit 107 wird automatisch erkannt, wenn eine Cartridge 1 in das Steuergerät 103 eingeschoben ist. In der Strukturaufschlusskammer 5, der Waschkammer 7, der Amplifikationskammer 9 und der Nachweiskammer 11 ist jeweils eine Öffnung 109 ausgebildet, durch die zu Beginn des Prozesses Wasser in die jeweilige Kammer gelangt. Das Wasser stammt aus einem Vorratsbehälter 111, der im Steuergerät 103 angeordnet ist. Der Vorratsbehälter 111 ist mit der Kontrolleinheit 107 verbunden. Nach Einführen der Cartridge 1 in die Aufnahme 105 wird ein bewegliches Röhrchen 113 in die Öffnung 17 geschoben und Wasser aus dem Vorratsbehälter 111 in die Prozesskammern eingebracht. Die hier nicht dargestellten trockenen Reagenzien lösen sich im Wasser und stehen zur Verarbeitung der Probe zur Verfügung.

Oberhalb der Strukturaufschlusskammer 5 ist im Steuergerät 103 ein Heizelement 115 angeordnet, das zur Steuerung mit der Kontrolleinheit 107 verbunden ist. Das Steuergerät 103 umfasst außerdem ein Peltier-Element 117, das oberhalb der Amplifikationskammer 9 angeordnet ist und ebenfalls mit der Kontrolleinheit 107 verbunden ist. Zur Auswertung der Analyse umfasst das Steuergerät 103 eine Auswerteeinheit 119. An der Auswerteeinheit 119 ist ein Kontaktfeld 121 angeordnet, dass mit den Kontakten 41 der Cartridge 1 nach dem Einführen in Kontakt steht. Dadurch stehen die durch die Detektionseinheit 39 gewonnenen Daten zur Verfügung und können entsprechend weiterverarbeitet werden. Die Auswerteeinheit 119 ist mit der Kontrolleinheit 107 verbunden. Um die ausgewerteten Daten einem Benutzer zugänglich zu machen, ist eine Schnittstelle zu einem Computer oder einem Monitor vorgesehen, die hier nicht dargestellt ist.

Unterhalb der Cartridge 1 ist ein Permanentmagnet 123 angeordnet. Der Permanentmagnet 123 ist mit einer Bewegungseinrichtung 125 verbunden, wodurch er sowohl innerhalb der Zeichnungsebene, als auch senkrecht dazu beweglich ist. Die Bewegungseinrichtung 125 ist mit der Kontrolleinheit 107 verbunden. Durch Bewegen des Permanentmagneten 123 ist es möglich, die Magnet-Beads 21 innerhalb der Cartridge 1 zwischen den einzelnen Prozesskammern zu bewegen bzw. durch Fixieren des Permanentmagneten 123 innerhalb einer der Prozesskammern festzuhalten. Es ist außerdem möglich, den Permanentmagneten 123 von den Prozesskammern weg zu bewegen, so dass der Einfluss des Magnetfeldes auf die Magnet-Beads 21 unterbunden wird. Dies ist beispielsweise nötig, damit die Magnet-Beads 21 suspensiert werden können und sich frei in der Lösung verteilen. Zusätzlich ist es möglich, den Permanentmagneten 123 unterhalb jeder Prozesskammer hin und her zu bewegen, so dass die Magnet-Beads 21 und die daran gebundenen Zellen bzw. DNA-Stränge hin und her bewegt werden. Kreisförmige Bewegungen, die einen Rühreffekt hervorrufen sind ebenfalls möglich. Die Bewegung innerhalb einer Kammer unterstützt einerseits die in der Aufbereitungskammer 3 stattfindende Bindung zwischen Magnet-Beads 21 und den in der Probe befindlichen Zellen, andererseits aber auch die Hybridisierung in der Nachweiskammer.

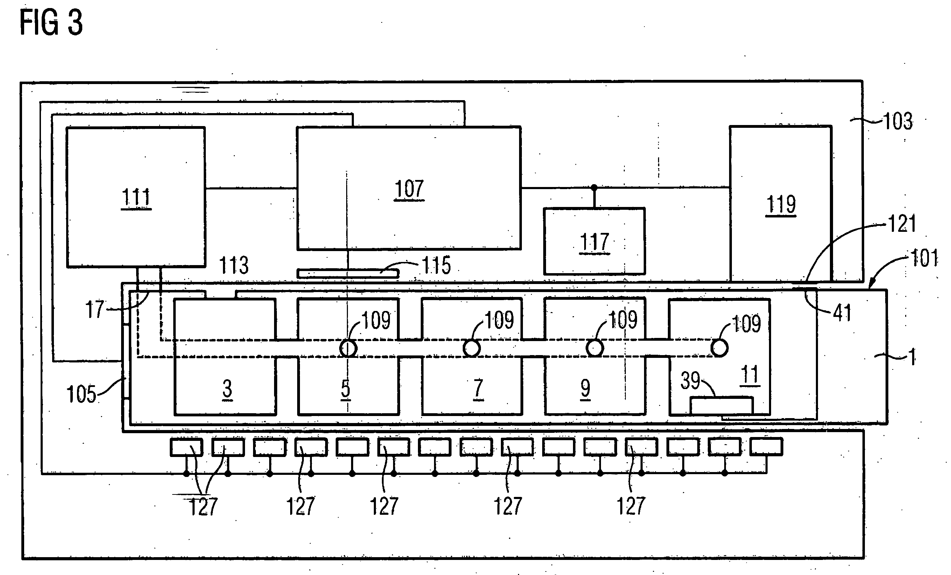

Figur 3 zeigt in einer alternativen Ausführungsform die Cartridge 1 im Steuergerät 103. Diese Ausführungsform unterscheidet sich von der in Figur 2 dargestellten nur durch die Ausgestaltung der Magneten zum Bewegen der Magnet-Beads 21. Unter der Cartridge 1 sind im Steuergerät 103 mehrere Elektromagneten 127 angeordnet. Jeder Elektromagnet 127 ist mit der Kontrolleinheit 107 verbunden. Durch sequenzielles Ein- und Ausschalten der Elektromagneten 127 ist es hier analog zu dem in Figur 2 gezeigten Ausführungsbeispiel möglich, die Magnet-Beads 21 innerhalb der Prozesskammern bzw. zwischen diesen zu bewegen. Die übrigen beschriebenen Bewegungen können ebenfalls ausgeführt werden.

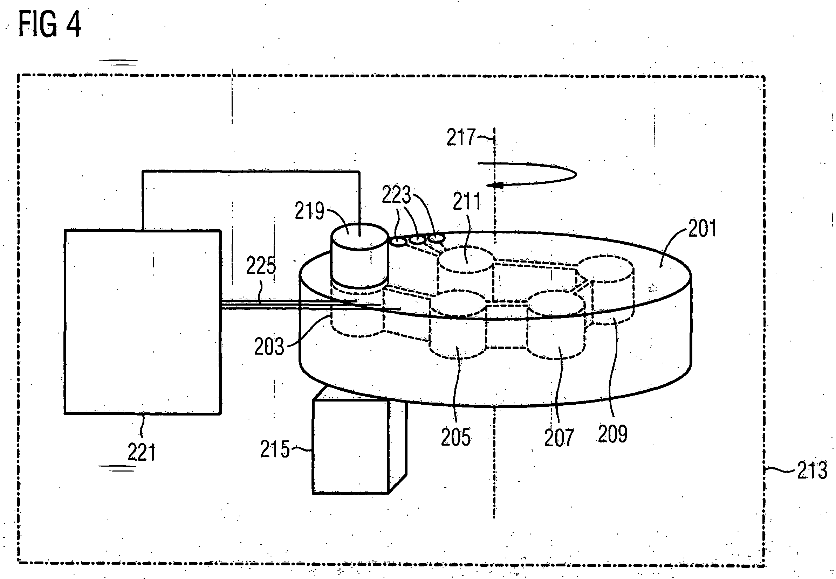

Figur 4 zeigt in einer alternativen Ausführungsform schematisch eine rund ausgeführte Cartridge 201. Die hier nur angedeuteten Prozesskammern 203, 205, 207, 209 und 211 sind im Gegensatz zu dem in Figur 1 gezeigten Ausführungsbeispiel nicht in einer Reihe hintereinander angeordnet, sondern entlang eines Kreisbogens. Unterhalb der Cartridge 201 ist im Steuergerät 213 ein fester Magnet 215 angeordnet, der als Permanent- oder Elektromagnet ausgebildet ist. Die Cartridge 201 ist nach Einführen in das Steuergerät 213 drehbar gelagert. Durch Rotieren der Cartridge 201 um die Achse 217 ist es nun möglich, die Magnet-Beads 21 zwischen den Prozesskammern 203, 205, 207, 209 und 211 zu bewegen. Dabei bleiben die Magnet-Beads 21 stets oberhalb des Permanentmagneten 215 fixiert, während sich die Cartridge 201 bewegt. Oberhalb der Cartridge 201 ist ein Peltier-Element 219 angeordnet, das mit einer Kontrolleinheit 221 verbunden ist. Damit lässt sich in den Prozesskammern 203, 205, 207, 209 und 211 die Temperatur steuern. Während des Prozesses wird die Cartridge 201 rotiert, so dass die Magnet-Beads 21 und damit auch die Zellen bzw. DNA nacheinander alle Prozesskammern 203, 205, 207, 209 und 211 durchlaufen. In der letzten Prozesskammer 211 ist wie in den oben beschriebenen Ausführungsbeispielen eine Detektionseinheit angeordnet, die mit Kontakten 223 verbunden ist. Die Kontrolleinheit 221 verfügt über Messkontakte 225, die bei einer Endposition der Cartridge 201, also wenn die Prozesskammer 211 zwischen dem Peltier-Element 219 und dem Magnet 215 liegt, in Kontakt mit dem Kontakten 223 stehen. Zur besseren Übersicht wurden der Vorratsbehälter und die entsprechende Öffnung in der Cartridge 201 nicht dargestellt. Gleiches gilt für die Einfüllöffnung und die Mikrokanäle zum Verteilen des Wassers in die Protzeskammern 203, 205, 207, 209 und 211.

Die beschriebene Vorrichtung lässt sich grundsätzlich zur Analyse verschiedenartiger Proben einsetzen. Dabei sind lediglich die Magnet-Beads 21 in ihren Bindungseigenschaften entsprechend an die nachzuweisenden Bestandteile der Probe anzupassen und entsprechende Vervielfältigungs- oder Nach-weismöglichkeiten bereitzustellen. Die hier beschriebene Vorrichtung zur Analyse von DNA und RNA lässt sich auch für ribosomale Nukleinsäure einsetzen. Allerdings lässt sich durch Anpassung und Ergänzung der einzelnen Prozessschritte auch eine Proteinanalyse durchführen.

Im Vergleich zu bekannten Analyseverfahren und Vorrichtungen zur DNA-Analyse hat die hier beschriebene Vorrichtung den Vorteil, dass sie eine weitestgehende Automatisierung der Analyseschritte ermöglicht. So ist bis auf das Einfüllen der Probe in die Cartridge und das Einführen der Cartridge in dem Steuergerät kein manueller Schritt bis zur Gewinnung der Ergebnisse durchzuführen. Zusätzlich lässt sich das Verfahren parallelisieren, so dass in einem Analysegang verschiedene DNA analysiert werden kann. Hierzu sind in der Nachweiskammer verschiedene Oligonukleotide entsprechend angeordnet.

Ein weiterer vorteil der hier beschriebenen Vorrichtung ist die Integration nahezu des gesamten Prozesses der Analyse in ein kompaktes und einfach handhabbares Gerät. Die Cartridge ist durch ihren im Vergleich zu bekannten Lösungen einfachen Aufbau ohne bewegliche Teile besonders einfach und kosten-günstig herstellbar. Im Steuergerät kann auf komplexe Mechanik zur Steuerung von Flüssigkeiten innerhalb der Cartridge verzichtet werden, da die Zellen und die DNA lediglich über magnetische Kräfte bewegt werden.

In einer alternativen Ausführung der Cartridge sind mehrere Waschkammern angeordnet, die analog zur in Figur 1 dargestellten Waschkammer 7 aufgebaut sind. So ist zwischen der Aufebreitungskammer 3 und der Strukturaufschlusskammer 5 eine Waschkammer angeordnet, um die Probe vor dem Strukturaufschluss reinigen zu können. Analog ist es möglich mehrere Waschkammern hintereinander anzuordnen, so dass mehrere Waschvorgänge hintereinander ausgeführt werden können.

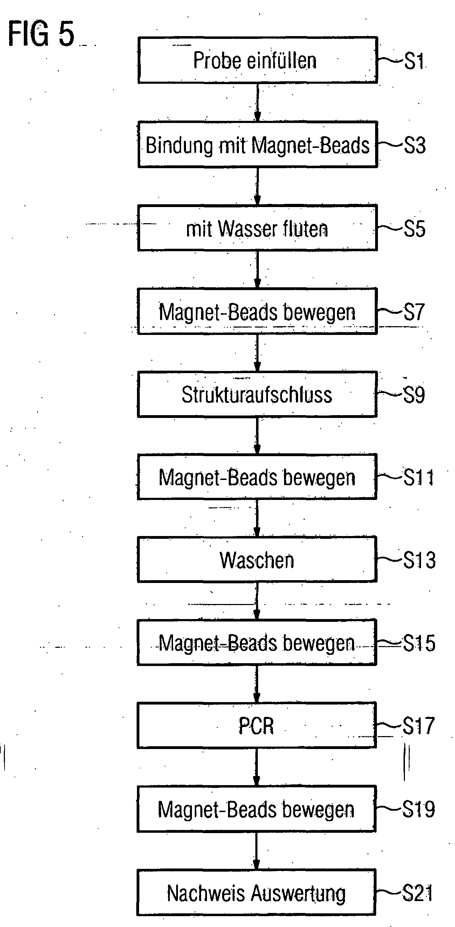

Figur 5 zeigt ein schematisches Ablaufdiagramm eines Analyseverfahrens unter Verwendung einer der oben beschriebenen Vorrichtungen. In einem ersten Verfahrensschritt S1 wird die Probe des Patienten durch die Einfüllöffnung in die Cartridge eingefüllt. Die Cartridge wird in daraufhin in das Steuergerät eingeführt, wodurch der Analyseprozess automatisch star-tet. In einem zweiten Verfahrensschritt S3 findet in der Aufbereitungskammer eine Bindung der dort gelagerten Magnet-Beads mit den zu untersuchenden Zellen der Probe statt. Dabei werden die Magnet-Beads in der Lösung durch geeignete Manipulation des Magnetfelds hin und her bewegt, um den Vorgang zu beschleunigen. In einem dritten Verfahrensschritt S5 werden die Prozesskammern der Cartridge mit Wasser gefüllt und die dort in trockener Form gelagerten Reagenzien in Lösung gebracht. In einem vierten Verfahrensschritt S7 werden die Magnet-Beads durch das Magnetfeld in die Strukturaufschlusskammer bewegt. Ein eventuell im Mikrokanal zwischen der Aufbereitungskammer und der Strukturaufschlusskammer angeordnetes Ventil wird zu diesem Zweck kurzzeitig geöffnet. In einem fünften Verfahrensschritt S9 werden durch den in der Strukturaufschlusskammer gelagerten und durch die Flutung mit Wasser in Lösung vorliegenden Lysepuffer die an die Magnet-Beads gebundenen Zellen aufgelöst und die in ihnen enthaltene DNA freigesetzt. Durch eine kurzzeitige Erwärmung des Lysepuffers wird die DNA denaturiert. Alternativ kann dem Lysepuffer auch Natronlauge zugesetzt sein, wodurch ebenfalls eine Denaturierung erreicht wird. Die freigesetzten DNA-Moleküle binden an die Magnet-Beads. Gleichzeitig werden durch ein Proteasen-Enzym im Lysepuffer die Antikörper von der Oberfläche der Magnet-Beads abgelöst, so dass auch Reste der Zellstrukturen nicht mehr an den Magnet-Beads angelagert sind. Die Magnet-Beads sind folglich nur noch mit den DNA-Molekülen der zu analysierenden Zellen verbunden.

In einem sechsten Verfahrensschritt S11 werden die Magnet-Beads mit DNA-Molekülen durch einen Mikrokanal in die Waschkammer der Vorrichtung bewegt. In einem siebten Verfahrensschritt S13 werden eventuell vorhanden Reste von Zellen und sonstige Verunreinigungen ausgewaschen. In einem achten Verfahrensschritt S15 werden die Magnet-Beads in die Amplifkationskammer bewegt. In einem neunten Verfahrensschritt S17 wird in der Amplifikationskammer eine Polymerase-Kettenreaktion durchgeführt und die DNA der zu untersuchenden Zellen dadurch vervielfältigt. Zur Durchführung der Kettenreaktion werden in der Amplifikationskammer durch ein Peltier-Element mehrere Temperaturzyklen zwischen zwei Temperaturen durchgeführt.

In einem zehnten Verfahrensschritt S19 werden die Magnet-Beads und die daran gebundenen DNA-Fragmente durch einen Mikrokanal in die Nachweiskammer der Vorrichtung bewegt. Darin findet in einem elften Verfahrensschritt S21 eine Hybridisierung der DNA-Fragmente mit in der Nachweiskammer angeordneten Oligonukleotiden statt. Dabei werden aufgrund der spezifischen Bindungseigenschaften lediglich diejenigen DNA-Fragmente an die Oligonukleotide angelagert, deren Analyse vorgesehen ist. Diese sind folglich spezifisch auf die Analyse eines speziellen Zelltyps zugeschnitten.

In einem alternativen Verfahren können noch weitere Reinigungsschritte analog zu Verfahrensschritt S13 vorgesehen werde, beispielsweise in einer zwischen der Aufbereitungskammer und der Strukturaufschlusskammer angeordneten weiteren Waschkammer. Es ist außerdem möglich, mehrere Waschkammern in Folge anzuordnen, um mehrere Waschschritte hintereinander ausführen zu können.

Das oben beschriebene Verfahren bezieht sich lediglich auf eine Sorte nachzuweisender DNA, beispielsweise von einem bestimmten Virus. Allerdings lassen sich die Verfahrensschritte auch derart parallelisieren, dass verschiedene Sorten von DNA nachgewiesen werden können. Es sind dann entsprechend präparierte Magnet-Beads und entsprechende Nachweismöglichkeiten vorzusehen. Ebenfalls ist es notwendig, die PCR auf mehrere Sorten von DNA auszurichten.

Es ist ebenfalls möglich, RNA in den Analyseprozess mit einzubeziehen. Vor der Amplifikation wird die RNA durch reverse Transkription in so genannte cDNA umgewandelt und kann dann mittels PCR vervielfältigt und durch die Detektionseinheit nachgewiesen werden.

## Patentansprüche

1. Vorrichtung zur Aufbereitung einer Probe für eine Analyse, umfassend folgende Merkmale:
- Mittel zum Binden von wenigstens einer biologischen Struktur der Probe, die gewählt ist aus Virus, Spore, Protozoe, Bakterium oder Zelle,
- Mittel zum Freisetzen durch Strukturaufschluss der biologischen Struktur von wenigstens einem in der wenigstens einen Struktur enthaltenen biologischen Molekül und
- Mittel zum Binden des wenigstens einen freigesetzten biologischen Moleküls,
- eine Anzahl von Prozesskammern zum Binden der biologischen Struktur und Freisetzen des biologischen Molekülsdurch Strukturaufschluss der biologischen Struktur, worin wenigstens vorübergehend die Mittel zum Binden der Struktur, die Mittel zum Freisetzen des Moleküls und die Mittel zum Binden des Moleküls enthalten sind,
- wenigstens ein Magnetfelderzeuger, der derart ausgebildet ist, dass damit die Mittel zum Binden der wenigstens einen Struktur und die Mittel zum Binden des wenigstens einen Moleküls zwischen den Prozesskammern bewegbar sind, **dadurch gekennzeichnet** das,
- die Mittel zum Binden der Struktur und die Mittel zum Binden des Moleküls als ein Substrat ausgeführt sind, das sowohl mit der Struktur zu einem Substrat-Struktur-Komplex als auch mit dem Molekül zu einem Substrat-Molekül-Komplex verbindbar ist.

2. Vorrichtung nach Anspruch 1, wobei das Substrat eine Protein-bindende Eigenschaft aufweist.

3. Vorrichtung nach Anspruch 2, wobei die Protein-bindende Eigenschaft als wenigstens ein Antikörper ausgeführt ist, wobei der wenigstens eine Antikörper auf die Struktur gerichtet ist.

4. Vorrichtung nach Anspruch 1, 2 oder 3, wobei das zweite Substrat eine Nukleinsäure-bindende Eigenschaft aufweist.

5. Vorrichtung nach Anspruch 4, wobei die Nucleinsäurebindende Eigenschaft als zum Molekül komplementäres oligonukleotid ausgeführt ist.

6. Vorrichtung nach Anspruch 4, wobei die Nukleinsäurebindende Eigenschaft als Silan ausgeführt ist.

7. Vorrichtung nach einem der Ansprüche 1 bis 6, wobei dasSubstrat jeweils wenigstens ein Magnet-Bead (21) umfasst.

8. Vorrichtung nach Anspruch 1, wobei das Substrat eine Protein- und eine Nukleinsäure-bindende Eigenschaft aufweist.

9. Vorrichtung nach Anspruch 8, wobei die Protein-bindende Eigenschaft als wenigstens ein Antikörper und die Nukleinsäure-bindende Eigenschaft als Oligonukleotid ausgeführt ist, wobei der wenigstens eine Antikörper auf die Struktur gerichtet ist und das Oligonukleotid zum Molekül komplementär ist.

10. Vorrichtung nach Anspruch 8, wobei die Protein-bindende. Eigenschaft als Antikörper und die Nukleinsäure-bindende Eigenschaft als Silan ausgeführt ist, wobei der wenigstens eine Antikörper auf die Struktur gerichtet ist.

11. Vorrichtung nach einem der Ansprüche 1, oder 8 bis 10, wobei das Substrat wenigstens ein Magnet-Bead (21) umfasst.

12. Vorrichtung nach einem der Ansprüche 1 bis 11, wobei die Prozesskammern als
- eine Aufbereitungskammer (3) zur Verwendung der Mittel zum Binden der Struktur und
- eine Strukturaufschlusskammer (5) zur Verwendung der Mittel zum Freisetzen des Moleküls und der Mittel zum Binden des Moleküls
ausgeführt sind.

13. Vorrichtung nach Anspruch 12, wobei die Mittel zum Binden der Struktur in der Auf bereitungskammer (3) gelagert sind und die Mittel zum Freisetzen des Moleküls und die Mittel zum Binden des Moleküls in der Strukturaufschlusskammer (5) gelatext sind.

14. Vorrichtung nach einem der obigen Ansprüche, umfassend Mittel zum Vervielfältigen des Moleküls.

15. Vorrichtung nach Anspruch 14, wobei die Mittel zum Vervielfältigen in der Strukturaufschlusskammer (5) der Vorrichtung gelagert sind.

16. Vorrichtung nach Anspruch 14, wobei die Mittel zum Vervielfältigen in einer weiteren, als Amplifikationskammer (9) ausgebildeten Prozesskammer der Vorrichtung gelagert sind.

17. Vorrichtung nach Anspruch 16, wobei zwischen der Strukturaufschlusskammer (5) und der Amplifikationskammer (9) wenigstens eine als Waschkammer (7) ausgebildete Prozesskammer angeordnet ist.

18. Vorrichtung nach einem der Ansprüche 12 bis 17, wobei die Prozesskammern durch Leitungen wenigstens zeitweise verbindbar sind.

19. Vorrichtung nach Anspruch 18, wobei Leitungen als Mikrokanäle (23, 25, 27, 29) ausgeführt sind.

20. Vorrichtung nach Anspruch 19, wobei wenigstens einer der Mikrokanäle (23, 25, 27, 29) durch wenigstens ein Ventil verschließbar ist.

21. Vorrichtung nach Anspruch 19, wobei die Mikrokanäle (23, 25, 27, 29) derart dimensioniert sind, dass sowohl der Substrat-Struktur-Komplex als auch der Substrat-Molekül-Komplex durch sie transportierbar ist und dass während der Durchführung der Prozessschritte ein störender Austausch anderer Stoffe zwischen den Prozesskammern verhindert wird.

22. Vorrichtung nach einem der Ansprüche 12 bis 21, wobei die Vorrichtung eine einmal verwendbare Einheit und ein Steuergerät (103) umfasst und die Prozesskammern in der Einheit enthalten sind.

23. Vorrichtung nach Anspruch 22, wobei im Steuergerät (103) Mittel zum Bewegen und/oder Fixieren des Substrat-Struktur-Komplexes und des Substrat-Molekül-Komplexes vorhanden sind.

24. Vorrichtung nach Anspruch 23, wobei der wenigstens eine Magnetfelderzeuger im Steuergerät (103) angeordnet ist.

25. Vorrichtung nach Anspruch 24, wobei der wenigstens eine Magnetfelderzeuger gegenüber der Einheit bewegbar ist.

26. Vorrichtung nach Anspruch 24, wobei die Einheit gegenüber dem wenigstens einen Magnetfelderzeuger bewegbar ist.

27. Vorrichtung nach einem der Ansprüche 24 bis 26, wobei der wenigstens eine Magnetfelderzeuger als Permanentmagnet (123) ausgeführt ist.

28. Vorrichtung nach einem der Ansprüche 24 bis 26, wobei der wenigstens eine Magnetfelderzeuger als Elektromagnet (127) ausgeführt ist.

29. Vorrichtung zur Analyse einer Probe Umfassend eine Vorrichtung zur Aufbereitung einer Probe nach einem der Ansprüche 1 bis 28, umfassend Mittel zum Nachweis des wenigstens einen Moleküls.

30. Vorrichtung nach Anspruch 29, wobei die Mittel zum Nachweis des Moleküls wenigstens teilweise in der Amplifikationskammer (9) angeordnet sind.

31. Vorrichtung nach Anspruch 29, wobei die Mittel zum Nach-weis des Moleküls wenigstens teilweise in einer, als Nachweiskammer (11) ausgebildeten Prozesskammer der Vorrichtung angeordnet sind.

32. Vorrichtung nach einem der Ansprüche 29 bis 31, wobei die Mittel zum Nachweis des Moleküls weitere Mittel zum Binden des Moleküls umfassen.

33. Vorrichtung nach Anspruch 32, wobei die weiteren Mittel zum Binden des Moleküls auf einer Detektionseinheit (39) angeordnet sind und die Detektionseinheit (39) wenigstens teilweise in der Nachweiskammer (11) angeordnet ist.

34. Vorrichtung nach Anspruch 32 oder 33, wobei die weiteren Mittel zum Binden des Moleküls als wenigstens eine Fängersonde ausgeführt sind.

35. Vorrichtung nach Anspruch 34, wobei der Substrat-Molekül-Komplex durch die Fängersonde immobilisierbar ist.

36. Vorrichtung nach einem der Ansprüche 34 bis 35, wobei die Detektionseinheit (39) einen magnetoresistiven Sensor umfasst.

37. Vorrichtung nach einem der Ansprüche 33 bis 35, wobei die Detektionseinheit (39) einen optischen Sensor umfasst.

38. Vorrichtung nach einem der Ansprüche 33 bis 35, wobei die Detektionseinheit (39) einen gravimetrischen Sensor umfasst.

39. Verfahren zur Aufbereitung einer Probe mittels einer Vorrichtung nach einem der Ansprüche 1 bis 38, umfassend folgende Verfahrensschritte:
- Binden der wenigstens einen biologischen Struktur, diegewählt ist aus Virus, Spore, Protozoe, Bakterium oder Zelle, der Probe durch die Mittel zum Binden der Struktur
- Bewegen der gebundenen biologischen Struktur mittels des wenigstens einen Magnetfelderzeugers,
- Freisetzung durch Strukturaufschluss der biologischen Struktur des wenigstens einen in der biologischen gebundenen Struktur enthaltenen biologischen Moleküls,
- Binden des freigesetzten biologischen Moleküls durch die Mittel zum Binden des Moleküls, wobei die Mittel zum Binden der Struktur und die Mittel zum Binden des Moleküls als ein Substrat ausgeführt sind, das sowahl mit der Struktur zu einem Substrat-Struktur-Komplex als auch mit dem Molekül zu einem Substrat-Molekül-Komplex verbindbar ist.

40. Verfahren nach Anspruch 39 wobei nach dem Binden der Scruktur an das Substrat eine Trennung des entstandenen Substrat-Struktur-Komplexes von der Probe durchgeführt wird.

41. Verfahren nach Anspruch 40, wobei die Trennung durch Bewegen des Substrat-Struktur-Komplexes in die Strukturaufschlusskammer (5) erfolgt.

42. Verfahren nach Anspruch 41, wobei das Substrat wenigstens ein Magnet-Bead (21) umfasst und ein Magnetfeld zum Bewagen des Substrat-Struktur-Komplexes verwendet wird.

43. Verfahren nach Anspruch 42, wobei das Magnetfeld durch den wenigstens einen Elektromagneten (127) der Vorrichtung erzeugt wird.

44. Verfahren nach Anspruch 42, wobei das Magnetfeld durch den Permanentmagnet (123) der Vorrichtung erzeugt wird.

45. Verfahren nach Anspruch 44, wobei der Permanentmagnet (123) zum Bewegen des Substrat-Struktur-Komplexes bewegt wird.

46. Verfahren nach Anspruch 42, wobei die einmal verwendbare Einheit der Vorrichtung relativ zum. Permanentmagneten (123) bewegt wird.

47. Verfahren nach einem der Ansprüche 39 bis 46, wobei nach der Freisetzung der Moleküle die Mittel zum Binden der Struktur von dem Substrat entfernt werden.

48. Verfahren nach Anspruch 47, wobei die Entfernung der Protein-bindenden Eigenschaft des Substrats durch ein Proteasen-Enzym erfolgt.

49. Verfahren nach einem der Ansprüche 47 bis 48, wobei die freigesetzten Moleküle zerkleinert werden.

50. Verfahren nach Anspruch 49, wobei jedes der Moleküle eine Nukleinsäure ist und die Zerkleinerung der Nukleinsäure durch eine Nuklease erfolgt.

51. Verfahren nach Anspruch 49 oder 50, wobei der Substrat-Molekül-Komplex während der Zerkleinerung hin- und herbewegt wird.

52. Verfahren nach einem der Ansprüche 39 bis 51, wobei die freigesetzten Moleküle denaturiert werden.

53. Verfahren nach Anspruch 52, wobei die Moleküle durch eine Temperaturerhöhung denaturiert werden.

54. Verfahren nach Anspruch 52, wobei die Moleküle chemisch denaturiert werden.

55. Verfahren nach einem der Ansprüche 39 bis 54, wobei durch das Substrat lediglich eine prokaryontische Nukleinsäure zu dem Substrat-Molekül-Komplex gebunden wird.

56. Verfahren nach einem der Ansprüche 39 bis 55, wobei der Substrat-Molekül-Komplex in die Amplifikationskammer (9) der Vorrichtung bewegt wird und eine Amplifikation des Molekülsdurchgeführt wird.

57. Verfahren nach Anspruch 56, wobei die Amplifikation mittels einer PCR ausgeführt wird, wobei die PCR wenigstens einen Temperaturzyklus umfasst.

58. Verfahren nach Anspruch 56 oder 57, wobei die Nukleinsäure eine RNA ist und vor der Amplifikation in cDNA revers transkribiert wird.

59. Verfahren zur Analyse einer Probe, umfassend folgende Verfahrensschritte:
- Aufbereitung der Probe mit einem Verfahren nach einem Ansprüche 3-9 bis 58 und
- Nachweis des Moleküls.

60. Verfahren nach Anspruch 59, wobei der Nachweis des Moleküls durch einen Nachweis einer Bindung des Moleküls an die Fängersonde erfolgt.

61. Verfahren nach Anspruch 59 oder 60, wobei der Substrat-Molekül-Komplex zu der Fängersonde bewegt wird.

62. Verfahren nach Anspruch 59, 60 oder 61, wobei zum Nachweis der Hybridisierung die immobilisierten Magnet-Beads (21) nachgewiesen werden.

## Claims

1. A device for preparing a sample for an analysis, comprising:
- means for binding at least one biological structure of the sample selected from virus, spore, protozoa, bacterium or cell,
- means for releasing at least one biological molecule contained in the at least one structure by structure disrupting of the biological structure, and
- means for binding the at least one released biological molecule,
- a number of process chambers for binding the biological structure and releasing the biological molcecule by structure disrupting of the biological structure, wherein the process chambers contain at least temporarily the means for binding the structure, the means for releasing the molecule and the means for binding the molecule,
- at least one magnetic field generator to move the means for binding the at least one structure and the means for binding the at least one molecule between the process chambers,
**characterized in**
**that** the means for binding the structure and the means for binding the molecule are embodied as a substrate which can bind to the structure to form a substrate-structure complex as well as to the molecule to form a substrate-molecule complex.

2. The device according to claim 1, wherein the substrate has a protein-binding property.

3. The device according to claim 2, wherein the protein-binding property is embodied as at least one antibody, wherein the at least one antibody is directed toward the structure.

4. The device according to claim 1, 2 or 3, wherein the substrate has a nucleic-acid-binding property.

5. The device according to claim 4, wherein the nucleic-acid-binding property is embodied as an oligonucleotide complementary to the molecule.

6. The device according to claim 4, wherein the nucleic-acid-binding property is embodied as silane.

7. The device according to of the claims 1 to 6, wherein the substrate each comprises at least one magnetic bead (21).

8. The device according to claim 1, wherein the substrate has a protein-binding property and a nucleic-acid-binding property.

9. The device according to claim 8, wherein the protein-binding property is embodied as at least one antibody and the nucleic-acid-binding property is embodied as an oligonucleotide, wherein the at least one antibody is directed toward the structure and the oligonucleotide is complementary to the molecule.

10. The device according to claim 8, wherein the protein-binding property is embodied as antibody and the nucleic-acid-binding property is embodied as silane, wherein the at least one antibody is directed toward the structure.

11. The device according to one of the claims 1 or 8 to 10, wherein the substrate comprises at least one magnetic bead (21).

12. The device according to one of the claims 1 to 11, wherein the process chambers are embodied as
- a preparation chamber (3) for using the means for binding the structure, and
- a structure disruption chamber (5) for using the means for releasing the molecule and the means for binding the molecule.

13. The device according to claim 12, wherein the means for binding the structure are stored in the preparation chamber (3) and the means for releasing the molecule and the means for binding the molecule are stored in the structure disruption chamber (5).

14. The device according to one of the preceding claims, further comprising means for replicating the molecule.

15. The device according to claim 14, wherein the replicating means are stored in the structure disruption chamber (5) of the device.

16. The device according to claim 14, wherein the replicating means are stored in a further process chamber of the device, said further process chamber being embodied as an amplification chamber (9).

17. The device according to claim 16, wherein at least one process chamber embodied as washing chamber (7) is arranged between the structure disruption chamber (5) and the amplification chamber (9).

18. The device according to one of the claims 12 to 17, wherein the process chambers are connectable by lines at least temporarily.

19. The device according to claim 18, wherein lines are embodied as microchannels (23, 25, 27, 29).

20. The device according to claim 19, wherein at least one of the microchannels (23, 25, 27, 29) is closable by at least one valve.

21. The device according to claim 19, wherein the microchannels (23, 25, 27, 29) are dimensioned such that both the substrate-structure complex and the substrate-molecule complex are transportable through them and that a disturbing exchange of other substances between the process chambers is prevented while the process steps are carried out.

22. The device according to one of the claims 12 to 21, wherein the device comprises a single-use unit and a controller (103) and the process chambers is contained in the unit.

23. The device according to claim 22, wherein means for moving and/oder fixing the substrate-structure complex and the substrate-molecule complex are present in the controller (103).

24. The device according to claim 23, wherein at least one magnetic field generator is arranged in the controller (103).

25. The device according to claim 24, wherein the at least one magnetic field generator is movable relative to the unit.

26. The device according to claim 24, wherein the unit is movable relative to the at least one magnetic field generator.

27. The device according to one of the claims 24 to 26, wherein the at least one magnetic field generator is embodied as permanent magnet (123).

28. The device according to one of the claims 24 to 26, wherein the at least one magnetic field generator is embodied as electromagnet (127).

29. A device for analyzing a sample, comprising a device for preparing a sample according to one of the claims 1 to 28, comprising means for detecting the at least one molecule.

30. The device according to claim 29, wherein the means for detecting the molecule is arranged at least partly in the amplification chamber (9).

31. The device according to claim 29, wherein the means for detecting the molecule is arranged at least partly in a process chamber of the device, said process chamber being embodied as detection chamber (11).

32. The device according to one of the claims 29 to 31, wherein the means for detecting the molecule comprise further means for binding the molecule.

33. The device according to claim 32, wherein the further means for binding the molecule are arranged on a detection unit (39) and the detection unit (39) is arranged at least partly in the detection chamber (11).

34. The device according to claim 32 or 33, wherein the further means for binding the molecule is embodied as at least one catcher probe.

35. The device according to claim 34, wherein the substrate-molecule complex is immobilizeable by the catcher probe.

36. The device according to one of the claims 34 to 35, wherein the detection unit (39) comprises a magnetoresistive sensor.

37. The device according to one of the claims 33 to 35, wherein the detection unit (39) comprises an optical sensor.

38. The device according to one of the claims 33 to 35, wherein the detection unit (39) comprises a gravimetric sensor.

39. A method for preparing a sample using a device according to one of the claims 1 to 38, comprising the following process steps:
- binding the at least one biological structure of the sample by the means for binding the structure, said biological structure being selected from virus, spore, protozoa, bacterium or cell,
- moving the bound biological structure by means of the at least one magnetic field generator,
- releasing the at least one biological molecule contained in the biological bound structure by structure disrupting of the biological structure,
- binding the released biological molecule by the means for binding the molecule, wherein the means for binding the structure and the means for binding the molecule are embodied as a substrate, that is linkable to the structure to form a substrate-structure complex as well as to the molecule to form a stubstrate-molecule complex.

40. The method according to claim 39, wherein, after the binding of the structure to the substrate, the resulting substrate-structure complex is separated from the sample.

41. The method according to claim 40, wherein the separation is effected by moving the substrate-structure complex into the structure disruption chamber (5).

42. The method according to claim 41, wherein the substrate comprises at least one magnetic bead (21) and a magnetic field is used for moving the substrate-structure complex.

43. The method according to claim 42, wherein the magnetic field is generated by the at least one electromagnet (127) of the device.

44. The method according to claim 42, wherein the magnetic field is generated by the permanent magnet (123) of the device.

45. The method according to claim 44, wherein the permanent magnet (123) is moved for moving the substrate-structure complex.

46. The method according to claim 42, wherein the single-use unit of the device is moved relatively to the permanent magnet (123).

47. The method according to one of the claims 39 to 46, wherein, after the molecules have been released, the means for binding the structure is removed from the substrate.

48. The method according to claim 47, wherein the protein-binding property of the substrate is removed by a protease enzyme.

49. The method according to one of the claims 47 to 48, wherein the released molecules are comminuted.

50. The method according to claim 49, wherein each of the molecules is a nucleic acid and the nucleic acid is comminuted by a nuclease.

51. The method according to claim 49 or 50, wherein the substrate-molecule complex is moved to and fro during comminution.

52. The method according to one of the claims 39 to 51, wherein the released molecules are denatured.

53. The method according to claim 52, wherein the molecules are denatured by an increase in temperature.

54. The method according to claim 52, wherein the molecules are denatured chemically.

55. The method according to one of the claims 39 to 54, wherein only a prokaryotic nucleic acid is bound to the substrate-molecule complex by the substrate.

56. The method according to one of the claims 39 to 55, wherein the substrate-molecule complex is moved into the amplification chamber (9) of the device and an amplification of the molecule is carried out.

57. The method according to claim 56, wherein the amplification is performed by means of a PCR, wherein the PCR comprises at least one thermal cycle.

58. The method according to claim 56 or 57, wherein the nucleic acid is an RNA and is reverse transcribed into cDNA prior to the amplification.

59. A method for analyzing a sample, comprising the following process steps:
- preparing the sample by a method according to one of the claims 39 to 58, and
- detecting the molecule.

60. The method according to claim 59, wherein the molecule is detected by detecting a binding of the molecule to the catcher probe.

61. The method according to claim 59 or 60, wherein the substrate-molecule complex is moved to the catcher probe.

62. The method according to claim 59, 60 or 61, wherein the immobilized magnetic beads (21) are detected for detecting the hybridization.

## Revendications

1. Dispositif de préparation d'un échantillon pour une analyse, comprenant les caractéristiques suivantes :
- des moyens de liaison à au moins une structure biologique de l'échantillon, qui est choisie parmi un virus, une spore, un protozoaire, une bactérie ou une cellule,
- des moyens de libération par digestion de structure de la structure biologique d'au moins une molécule biologique contenue dans l'au moins une structure et
- des moyens de liaison à l'au moins une molécule biologique libérée,
- un nombre de chambres de processus pour la liaison à la structure biologique et la libération de la molécule biologique par digestion de structure de la structure biologique, dans lequel, au moins provisoirement, les moyens de liaison à la structure, les moyens de libération de la molécule et les moyens de liaison à la molécule sont contenus,
- au moins un générateur de champ magnétique qui est conçu de telle sorte que les moyens de liaison à l'au moins une structure et les moyens de liaison à l'au moins une molécule peuvent ainsi être déplacés entre les chambres de processus,
**caractérisé en ce**
- **que** les moyens de liaison à la structure et les moyens de liaison à la molécule sont réalisés sous la forme d'un substrat qui peut être relié aussi bien à la structure en un complexe substrat-structure qu'à la molécule en un complexe substrat-molécule.

2. Dispositif selon la revendication 1, dans lequel le substrat présente une propriété de liaison à une protéine.

3. Dispositif selon la revendication 2, dans lequel la propriété de liaison à une protéine est réalisée sous la forme d'au moins un anticorps, dans lequel l'au moins un anticorps est dirigé contre la structure.

4. Dispositif selon la revendication 1, 2 ou 3, dans lequel le substrat présente une propriété de liaison à un acide nucléique.

5. Dispositif selon la revendication 4, dans lequel la propriété de liaison à un acide nucléique est réalisée sous la forme d'un oligonucléotide complémentaire à la molécule,

6. Dispositif selon la revendication 4, dans lequel la propriété de liaison à un acide nucléique est réalisée sous la forme d'un silane.

7. Dispositif selon l'une des revendications 1 à 6, dans lequel le substrat comprend respectivement au moins une bille magnétique (21).

8. Dispositif selon la revendication 1, dans lequel le substrat présente une propriété de liaison à une protéine et à unacide nucléique.

9. Dispositif selon la revendication 8, dans lequel la propriété de liaison à une protéine est réalisée sous la forme d'au moins un anticorps et la propriété de liaison à un acide nucléique est réalisée sous la forme d'un oligonucléotide, dans lequel l'au moins un anticorps est dirigé contre la structure et l'oligonucléotide est complémentaire à la molécule.

10. Dispositif selon la revendication 8, dans lequel la propriété de liaison à une protéine est réalisée sous la forme d'un anticorps et la propriété de liaison à un acide nucléique est réalisée sous la forme d'un silane, dans lequel l'au moins un anticorps est dirigé contre la structure.

11. Dispositif selon l'une des revendications 1, ou 8 à 10, dans lequel le substrat comprend au moins une bille magnétique (21).

12. Dispositif selon l'une des revendications 1 à 11, dans lequel les chambres de processus sont réalisées sous la forme
- d'une chambre de préparation (3) pour l'utilisation des agents de liaison à la structure et
- une chambre de digestion de structure (5) pour l'utilisation des moyens de libération de la molécule et des moyens de liaison à la molécule.

13. Dispositif selon la revendication 12, dans lequel les moyens de liaison à la structure sont placés dans la chambre de préparation (3) et les moyens de libération de la molécule et les moyens de liaison à la molécule sont placés dans la chambre de digestion de structure (5).

14. Dispositif selon l'une des revendications ci-dessus, comprenant des moyens de multiplication de la molécule.

15. Dispositif selon la revendication 14, dans lequel les moyens de multiplication sont placés dans la chambre de digestion de structure (5) du dispositif.

16. Dispositif selon la revendication 14, dans lequel les moyens de multiplication sont placés dans une autre chambre de processus du dispositif conçue comme une chambre d'amplification (9).

17. Dispositif selon la revendication 16, dans lequel, entre la chambre de digestion de structure (5) et la chambre d'amplification (9) est disposée au moins une chambre de processus conçue comme une chambre de lavage (7).

18. Dispositif selon l'une des revendications 12 à 17, dans lequel les chambres de processus peuvent être reliées, au moins par moments, par des conduites.

19. Dispositif selon la revendication 18, dans lequel des conduites sont réalisées sous la forme de micro-canaux (23, 25, 27, 29).

20. Dispositif selon la revendication 19, dans lequel au moins l'un des microcanaux (23, 25, 27, 29) peut être fermé par au moins une valve.

21. Dispositif selon la revendication 19, dans lequel les microcanaux (23, 25, 27, 29) sont dimensionnés de telle sorte qu'aussi bien le complexe substrat-struc-ture que le complexe substrat-molécule puissent être transportés dans ceux-ci et que, pendant l'exécution des étapes de processus, un échange perturbateur d'au-tres substances est empêché entre les chambres de processus.

22. Dispositif selon l'une des revendications 12 à 21, dans lequel le dispositif comprend une unité utilisable une fois et un appareil de commande (103) et les chambres de processus sont contenues dans l'unité.

23. Dispositif selon la revendication 22, dans lequel, dans l'appareil de commande (103), des moyens de déplacement et/ou de fixation du complexe substrat-structure et du complexe substrat-molécule sont présents.

24. Dispositif selon la revendication 23, dans lequel l'au moins un générateur de champ magnétique est disposé dans l'appareil de commande (103).

25. Dispositif selon la revendication 24, dans lequel l'au moins un générateur de champ magnétique peut être déplacé par rapport à l'unité.

26. Dispositif selon la revendication 24, dans lequel l'unité peut être déplacée par rapport à au moins un générateur de champ magnétique.

27. Dispositif selon l'une des revendications 24 à 26, dans lequel l'au moins un générateur de champ magné-tique est réalisé sous la forme d'un aimant permanent (123).

28. Dispositif selon l'une des revendications 24 à 26, dans lequel l'au moins un générateur de champ magné-tique est réalisé sous la forme d'un électroaimant (127).

29. Dispositif d'analyse d'un échantillon, comprenant un dispositif de préparation d'un échantillon selon l'une des revendications 1 à 28, comprenant des moyens de détection de l'au moins une molécule.

30. Dispositif selon la revendication 29, dans lequel les moyens de détection de la molécule sont disposés au moins partiellement dans la chambre d'amplification (9).

31. Dispositif selon la revendication 29, dans lequel les moyens de détection de la molécule sont disposés au moins partiellement dans une chambre de processus du dispositif conçue comme une chambre de détection (11).

32. Dispositif selon l'une des revendications 29 à 31, dans lequel les moyens de détection de la molécule comprennent d'autres moyens de liaison à la molécule.

33. Dispositif selon la revendication 32, dans lequel les autres moyens de liaison à la molécule sont disposés sur une unité de détection (39) et l'unité de détection (39) est disposée au moins partiellement dans la chambre de détection (11).

34. Dispositif selon la revendication 32 ou 33, dans lequel les autres moyens de liaison à la molécule sont réalisés sous la forme d'au moins une sonde de capture.

35. Dispositif selon la revendication 34, dans lequel le complexe substrat-molécule est immobilisé par la sonde de capture.

36. Dispositif selon l'une des revendications 34 à 35, dans lequel l'unité de détection (39) comprend un capteur magnétorésistif.

37. Dispositif selon l'une des revendications 33 à 35, dans lequel l'unité de détection (39) comprend un capteur optique.

38. Dispositif selon l'une des revendications 33 à 35, dans lequel l'unité de détection (39) comprend un capteur gravimétrique.

39. Procédé de préparation d'un échantillon au moyen d'un dispositif selon l'une des revendications 1 à 38, comprenant les étapes de procédé suivantes:
- liaison de l'au moins une structure biologique, qui est choisie parmi un virus, une spore, un protozoaire, une bactérie ou une cellule, de l'échantillon par les moyens de liaison à la structure,
- déplacement de la structure biologique liée au moyen de l'au moins un générateur de champ magnétique,
- libération par digestion de structure de la structure biologique de l'au moins une molécule biologique contenue dans la structure biologique liée,
- liaison de la molécule biologique libérée par les moyens de liaison à la molécule, dans lequel les moyens de liaison à la structure et les moyens de liaison à la molécule sont réalisés sous la forme d'un substrat qui peut être relié aussi bien à la structure en un complexe substrat-structure qu'à la molécule, en un complexe substrat-molécule.

40. Procédé selon la revendication 39, dans lequel, après la liaison de la structure au substrat, une séparation du complexe substrat-structure obtenu de l'échantillon est exécutée.

41. Procédé selon la revendication 40, dans lequel la séparation s'effectue par déplacement du complexe substrat-structure dans la chambre de digestion de structure (5).

42. Procédé selon la revendication 41, dans lequel le substrat comprend au moins une bille magnétique (21) et un champ magnétique est utilisé pour le déplacement du complexe substrat-structure.

43. Procédé selon la revendication 42, dans lequel le champ magnétique est généré par l'au moins un électroaimant (127) du dispositif.

44. Procédé selon la revendication 42, dans lequel le champ magnétique est généré par l'aimant permanent (123) du dispositif.

45. Procédé selon la revendication 44, dans lequel l'aimant permanent (123) est déplacé par le déplacement du complexe substrat-structure.

46. Procédé selon la revendication 42, dans lequel l'unité utilisable une fois du dispositif est déplacée par rapport aux aimants permanents (123).

47. Procédé selon l'une des revendications 39 à 46, dans lequel, après la libération des molécules, les moyens de liaison à la structure sont éliminés du substrat.

48. Procédé selon la revendication 47, dans lequel l'élimination de la propriété de liaison à une protéine du substrat s'effectue par une enzyme protéase.

49. Procédé selon l'une des revendications 47 à 48, dans lequel les molécules libérées sont réduites.

50. Procédé selon la revendication 49, dans lequel chacune des molécules est un acide nucléique et la réduction de l'acide nucléique s'effectue par une nucléase.

51. Procédé selon la revendication 49 ou 50, dans lequel le complexe substrat-molécule effectue un mouvement de va-et-vient pendant la réduction.

52. Procédé selon l'une des revendications 39 à 51, dans lequel les molécules libérées sont dénaturées.

53. Procédé selon la revendication 52, dans lequel les molécules sont dénaturées par une augmentation de température.

54. Procédé selon la revendication 52, dans lequel les molécules sont dénaturées chimiquement.

55. Procédé selon l'une des revendications 39 à 54, dans lequel, par le substrat, seul un acide nucléique procaryote est lié au complexe substrat-molécule.

56. Procédé selon l'une des revendications 39 à 55, dans lequel le complexe substrat-molécule est déplacé dans la chambre d'amplification (9) du dispositif et une amplification de la molécule est exécutée.

57. Procédé selon la revendication 56, dans lequel l'amplification est réalisée au moyen d'une PCR, dans lequel la PCR comprend au moins un cycle de tempéra-tures.

58. Procédé selon la revendication 56 ou 57, dans lequel l'acide nucléique est un ARN et est soumis à une transcription inverse avant l'amplification en ADNc.

59. Procédé d'analyse d'un échantillon, comprenant les étapes de procédé suivantes:
- préparation de l'échantillon avec un procédé selon une revendication 39 à 58 et
- détection de la molécule.

60. Procédé selon la revendication 59, dans lequel la détection de la molécule s'effectue par une détection d'une liaison de la molécule à la sonde de capture.

61. Procédé selon la revendication 59 ou 60, dans lequel le complexe substrat-molécule est déplacé vers la sonde de capture.

62. Procédé selon la revendication 59, 60 ou 61, dans lequel, pour la détection de l'hybridation, les billes magnétiques immobilisées (21) sont détectées.
